(19) **Europäisches Patentamt / European Patent Office / Office européen des brevets**

(11) **EP 3 002 651 B1**

(12) **EUROPEAN PATENT SPECIFICATION**

(45) Date of publication and mention
of the grant of the patent:
**13.01.2021 Bulletin 2021/02**

(51) Int Cl.:
**G05B 23/02** *(2006.01)* **G05B 17/02** *(2006.01)*

(21) Application number: **14187031.1**

(22) Date of filing: **30.09.2014**

(54) **Monitoring means and monitoring method for monitoring at least one step of a process run on an industrial site**

Überwachungseinrichtung und Überwachungsverfahren zur Überwachung von mindestens einem Schritt eines an einem Industriestandort durchgeführten Prozesses

Moyens de surveillance et procédé de surveillance permettant de surveiller au moins une étape d'un processus exécuté sur un site industriel

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.04.2016 Bulletin 2016/14**

(73) Proprietor: **Endress+Hauser Group Services AG 4153 Reinach (CH)**

(72) Inventors:
• **Vaissiere, Dimitri**
  **68130 Wittersdorf (FR)**
• **Nick, Markus**
  **79595 Rümmingen (DE)**

(74) Representative: **Andres, Angelika Maria Endress+Hauser Group Services (Deutschland) AG+Co. KG Colmarer Straße 6 79576 Weil am Rhein (DE)**

(56) References cited:
US-A1- 2003 014 692     US-A1- 2004 078 171
US-A1- 2009 216 393     US-A1- 2009 299 713

• ISERMANN R: "Model-based fault-detection and diagnosis - status and applications", ANNUAL REVIEWS IN CONTROL, PERGAMON, AMSTERDAM, NL, vol. 29, no. 1, 1 January 2005 (2005-01-01), pages 71-85, XP004941638, ISSN: 1367-5788, DOI: 10.1016/J.ARCONTROL.2004.12.002
• Rolf Isermann: "Process Fault Detection Based on Modeling and Estimation Methods A Survey", Automatica, 1 January 1984 (1984-01-01), pages 387-404, XP055209302, Great Britain Retrieved from the Internet: URL:http://ac.els-cdn.com/0005109884900980 /1-s2.0-0005109884900980-main.pdf?_tid=444 0508a-4afb-11e5-869a-00000aab0f6c&acdnat=1 440488054_425187f29a667e1cb8980fe7e0cb108 1 [retrieved on 2015-08-25]

**Description**

The present invention concerns monitoring means and a monitoring method for monitoring at least one step of a predefined process run on an industrial site for performing said process comprising means for running said process on said site, including a control unit controlling initiation and performance of the steps of said process, and measurement devices involved in the performance of the steps for measuring process related quantities.

Industrial sites designed to perform predefined processes, e.g. production processes, are used in nearly all branches of industry.

Industrial production sites are quite often very complex and comprise means for running the process on the site, including a control unit controlling initiation and performance of the steps of process and a multitude of measurement devices for measuring quantities related to each of the steps, as well as manually or automatically operated appliances, such as pumps, valves or switches, and passive components, like for example pipes or containers.

Examples of measurement devices are level measurement devices e.g. for measuring a level of a product in a container, pressure measurement devices e.g. for measuring a pressure inside a container, flow meters for measuring a flow through a pipe, or temperature measurement devices e.g. for measuring a temperature of an intermediate product during production or processing. Measurement results of these measurement devices are commonly used in process automation for monitoring and/or controlling the process performed on the site, e.g. in order to ensure, that the product produced meets the requirements specified for it. Thus it is necessary to ensure, that the measurement devices applied for monitoring and controlling the process operate properly.

In order to minimize down times due to disturbances occurring on the site, industrial sites are maintenanced, and measurement devices are regularly maintenanced and/or or calibrated. In addition predictive maintenance schemes, criticality analysis, and/or failure mode cause and effect analysis (FMECA) can be applied.

Obviously there is a strong desire to operate industrial sites safely and profitably. In consequence there is a need in industry, to discover any disturbance occurring during a performance of the process, to determine its root cause, and to find and apply an appropriate remedy as soon as possible.

Obviously disturbances can be due to a multitude of different root cause, e.g. root causes related to the measurement devices, the appliances or the passive components, ranging from top end measurement devices equipped with means for self-monitoring, self-diagnosing and self-verification of their performance to non-monitored manually operated appliances or passive components, like for example pipes or valves. Thus detecting a disturbance, determining its root cause and finding an appropriate remedy may require dealing with a large number of different devices from different manufacturers. In consequence monitoring, maintenance, and quality control of an industrial site is very complex, and requires inputs from a very large number of different sources.

This makes it very difficult to detect disturbances at an early stage. Quite often a disturbance is only recognized after completion of the entire process, when the end product produced is found not to be compliant to the quality standards required for it.

One method of trying to detect disturbances at an early stage is described in EP 1 725 919 B1. This method is based on statistical process monitoring performed based on statistical measures, such as a mean or a variance, determined from process variables, e.g. measurement results, collected by field devices, like for example measurement devices, valves, switches, transmitters or sensors. The method may include determination of statistical distributions of process variables and correlations between two variables.

In order to monitor a complex site based on statistical process monitoring it is necessary, to determine the process variables available for this purpose, to identify and determine the appropriate statistical measures to be applied for them, and to foresee means for collecting the corresponding statistical data.

To this extend, the method described in EP 1 725 919 B1, foresees an analysis of the site to be performed, in order to determine a plurality of statistical parameters, to be generated by a plurality of statistical data collection blocks implemented in a plurality of field device communicatively coupled to a network, in order to enable the plurality of field device to provide the plurality of statistical parameters to a statistical data collection system via the network.

Obviously, the determination of process variables available for statistical process monitoring and the identification and determination of the appropriate statistical measures to be applied for them, is not an easy task, and many field devices may not have implemented statistical data collecting blocks.

US 2003/014692 A1 discloses a dynamical invariant anomaly detector, designed to detect anomalies by monitoring dynamical invariants. These are governing parameters of the dynamics of the system, such as the coefficients of the differential (time-delay) equation in case of time series data given in form of a time series describes the evolution of an underlying dynamical system. It is assumed, that this time series cannot be approximated by a simple analytical expression and does not possess any periodicity. Thus, it is considered that this time series can be seen as a realization of an underlying stochastic process, which can only be described in terms of probability distributions. Information on these distributions can however only be easily obtained if the stochastic process is stationary. Since the assumption of stationarity of the underlying stochastic process would exclude important components of the system, a method to deal with non-stationary (stochastic!) processes is developed.

It is an object of the invention to provide a monitoring method for monitoring at least one step of a process performed on an industrial site, which allows prompt, reliable and efficient detection of disturbances based on readily available information.

To this extent, the invention comprises a method according to claim 1.

The invention and further advantages are explained in more detail using the figures of the drawing, in which one exemplary embodiment is shown. The same reference numerals refer to the same elements throughout the figures.

Fig. 1 shows: an an example of an industrial site for performing a predefined process;

Fig. 2a-c show: measurement results obtained by the first level measurement device, the second level measurement device and the flow meter of Fig. 1 during performance of a first step during a reference run and corresponding fitted functions;

Fig. 2d-e show: measurement results obtained by the first level measurement device and the second level measurement device of Fig. 1 during performance of a second step during a reference run corresponding fitted functions;

Fig. 3a-e show: the sets of fitted coefficients of the corresponding fitted functions shown in Fig. 2a-e and corresponding reference ranges;

Fig. 4a-c show: probability distributions of residues between measurement results of the first level measurement device, the second measurement device and the flow meter of Fig. 1 and the corresponding fitted functions for the first step;

Fig. 4d-e show: probability distributions of residues between measurement results of the first and the second level measurement device of Fig. 1 and the corresponding fitted functions for the second step;

Fig. 5 shows: measurement results of the first level measurement device as a function of simultaneously obtained measurement results of the second level measurement device obtained during faultless performances of the first step;

Fig. 6 shows: measurement results of the first level measurement device as a function of simultaneously obtained measurement results of the flow meter obtained during faultless performances of the first step; and

Fig. 7 shows: measurement results of the first level measurement device as a function of simultaneously obtained measurement results of the second level measurement device obtained during faultless performances of the second step.

The invention concerns monitoring means for monitoring at least one step of a predefined process performed on an industrial site designed to perform the predefined process and a method of monitoring at least one step of the process performed on the site. In general the industrial site comprises means for running the process on said site, including a control unit controlling initiation and performance of the steps of the process, measurement devices MD for measuring quantities related to each of the steps, manually or automatically operated appliances, like for example pumps, valves or switches, and passive components, like for example pipes or containers. Obviously, industrial sites can be very complex and the processes performed by them can involve a large number of steps. In order to make the invention more easy to understand, it is explained based on a very simple process including a first step of filling a component into a container and a second step of agitating the content of the container. The invention can however be applied in the same way to much more complex sites performing much more complex processes.

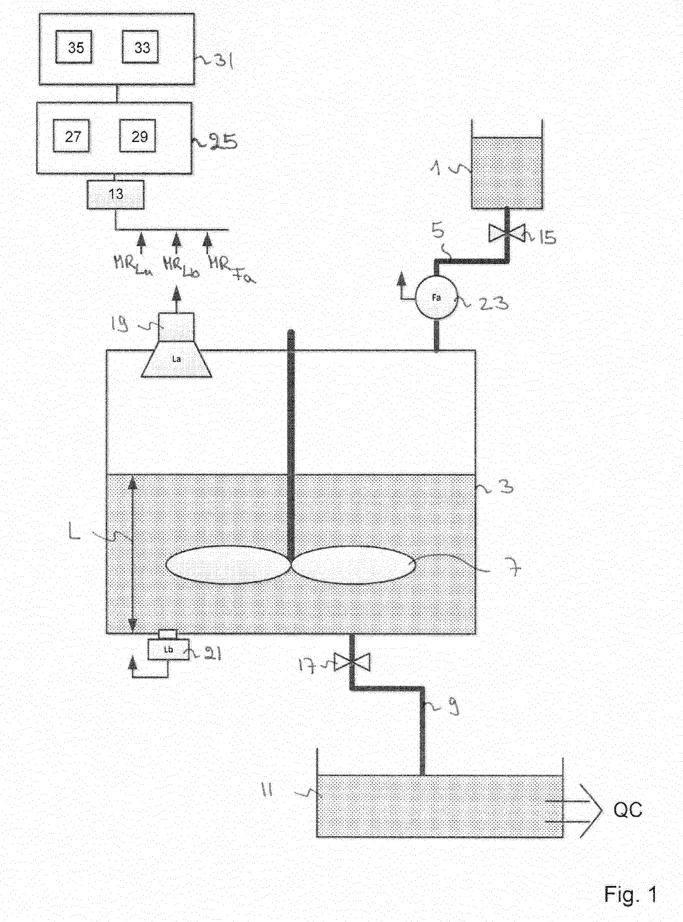

At the beginning, the process to be performed on the site is defined, and individual steps of the process are identified. In order to perform the above mentioned simple process, the site shown in Fig. 1 comprises a supply tank 1 containing the component, which is connected to a container 3 via an inlet pipe 5. The container 3 is equipped with an agitator 7, and an outlet pipe 9 is foreseen, connecting the container 3 to a receptacle 11. The site further comprises a control unit 13 controlling initiation and performance of the steps of the process. The control unit 13 can for example be a programmable logical controller (PLC) connected to the measurement devices MD and the automatically operated appliances, e.g. pumps or valves, which controls the appliances based on the measurement results $MR_{MD}$ obtained from the measurement devices MD.

In the embodiment shown in Fig. 1, the inlet pipe 5 and the outlet pipe 9 are equipped with a valve 15, 17, which can either be operated manually or be opened and closed by the control unit 13 via corresponding actuators.

The measurement devices MD foreseen in the present example comprise a first level measurement device 19, installed on top of the container 3 for measuring the filling level L inside the container 3. This can for example be a radar time of flight level measurement device. In addition a second level measurement device 21 is foreseen. The second level measurement device 21 comprises for example a pressure sensor measuring a hydrostatic pressure indicative of the level L, which is positioned at the bottom of the container 3. In addition a flow meter 23 is foreseen in inlet pipe 5 for measuring a mass or volume flow flowing through the inlet pipe 5.

According to the invention, monitoring means for monitoring at least one step of the process are foreseen, comprising a monitoring unit 25 which is designed and connected up in such a way, that it has real-time access to the measurement results $MR_{MD}$ obtained by at least some, preferably all of the measurement devices MD involved in the performance of the steps of the process to be monitored by it. To this extend the monitoring unit 25 can be connected to the measurement device MD involved in the performance of the steps to be monitored directly, e.g. via a bus line, or it can be provided with the measurement results $MR_{MD}$ and the measurement times $t_j$ at which they were measured via the control unit 13, which is connected to the measurement devices MD, e.g. via a bus line. The later alternative is shown in Fig. 1.

In addition means are foreseen, for enabling the monitoring unit 25 to relate the times $t_j$ at which the measurement results $MR_{MD}(t_j)$ are obtained to a starting time $t_0$, at which performance of the respective step of the process was started during the respective run. Since the control unit 13 initiates the performance of each step, this information is readily available within the control unit 13, and can be provided to the monitoring unit 25 by it.

The monitoring unit 25 comprises a memory 27 and computing means 29, e.g. a microprocessor or another type of signal processing or computing unit, designed to run software provided to it using input data supplied to it by the measurement devices MD, the control unit 13 and the memory 27. The monitoring unit 25 is set up to monitor at least one step, preferably all steps of the process, based on the measurement results $MR^{PR}(t_j)$ obtained during performance of the respective step by at least two, preferably all measurement devices MD involved in the performance of the respective step and the times $t_j$ at which they were obtained in relation to the starting time $t_0$ at which the respective step was started during each monitored run of the process.

Monitoring of a step is performed based on properties K to be determined based on the measurement results $MR(t_j)$ obtained by the measurement devices MD involved in the performance of this step during the monitored performance of the step. The properties K are determined by the monitoring unit 25, and compared to corresponding predetermined reference ranges $R_K$, each comprising a range for the respective property K, within which the property K is expected to occur during faultless performance of the step. In case at least one property K exceeds at least one upper or lower limit given by the corresponding reference range $R_K$ a fault is detected by the monitoring unit 25.

The properties K to be determined and the corresponding reference ranges $R_K$ are determined based on a model of the respective step, which is determined during a preparatory phase and subsequently stored in the memory 27 of the monitoring unit 25.

During the preparatory phase test runs of the process are performed on the site. During each test run, the measurement results $MR_{MD}(t_j)$ obtained by the measurement devices MD involved in the performance of the respective step of the process are recorded throughout the performance of the step together with the times $t_j$ at which they were obtained during the performance of the respective step. This is preferably done for all steps of the process. For each process step, the times $t_j$ at which the recorded measurement results $MR_{MD}(tj)$ were obtained by the measurement devices MD involved in this particular step are based on a time scale beginning with a starting time $t_0$, at which the respective process step was started during the respective test run.

At the end of each test run quality control means QC are applied, in order to determine, whether the result produced by the respective test run is compliant to predefined quality requirements. Depending on the type of process performed, quality control means can range from simple visual inspections performed on site, to extensive testing procedures, which can be performed manually and/or by fully automated quality control apparatuses.

If the produced result is compliant, the test run is validated, and the measurement results $MR^i_{MD}(t_j)$ and the times $t_j$ at which they were measured during the validated test run are stored in the memory 27 of the monitoring unit 25 as a performed reference run. For each performed reference run faultless performance of the process is assumed, and properties K derived based on the measurement results $MR^i_{MD}(t_j)$ of the performed reference runs are assumed to be representative of faultless performance of the step.

Once a number m, larger or equal to a predetermined minimal number $m_{min}$, e.g. a minimal number of $m_{min}=5$, of performed reference runs, have been recorded, a model set up for each step of the process to be monitored, and the reference ranges $R_K$ for the properties K are determined.

The accuracy of the model of a step can be improved by increasing the number of performed reference runs available for its determination. In addition or instead, simulations can be performed based on the measurement results of the recorded number of performed reference runs, generating measurement results of a larger number of simulated reference runs. Based on a sufficiently large population of reference runs RRi, comprising performed reference runs or performed and simulated reference runs, each model set up for a step of the process will render a precise representation of the properties K of the measurement results $MR_{MD}$ of the measurement devices MD to be expected during faultless performance of the respective step.

The measurement devices MD involved in the first step of the process described above are the flow meter 23 generating measurement results $MR_{Fa}$ of the flow of the first component flowing into the container 3, the first level measurement device 19 generating measurement results $MR_{La}$ of the level L inside the container 3, and the second level measurement device 21 generating measurement results $MR_{Lb}$ of the level L inside the container 3. The measurement devices MD involved in the second step include the first and the second level measurement devices 19, 21.

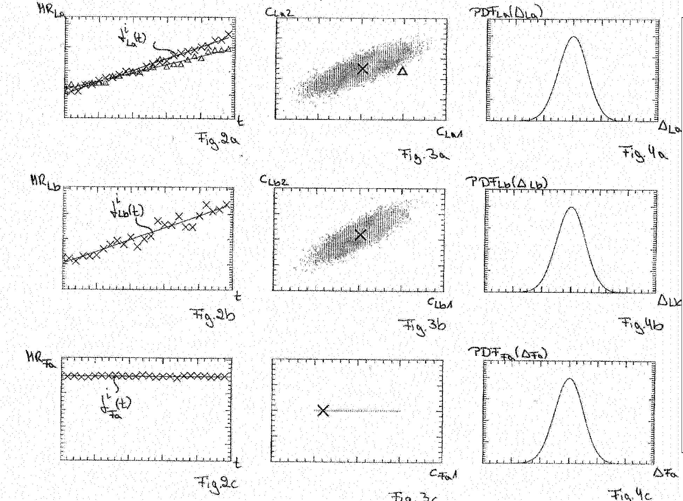

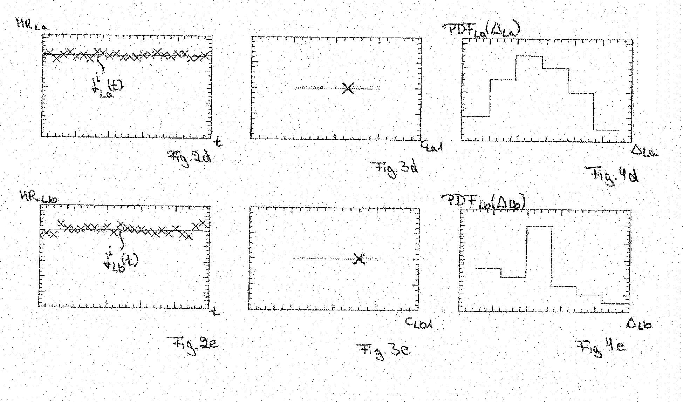

Fig. 2a, 2b and 2c show the measurement results $MR_{La}{}^{i}(t_j)$, $MR^{i}{}_{Lb}(t_j)$, $MR^{i}{}_{Fa}(t_j)$ of the first level measurement device 19, the second level measurement device 21, and the flow meter 23 as a function of the time $t_j$ at which they were measured during performance of the first step during the i-th reference run $RR_i$. Fig. 2d and 2e show the measurement results $MR_{La}{}^{i}(t_j)$ $MR^{i}{}_{Lb}(t_j)$ of the first and the second level measurement device 19, 21 as a function of the time $t_j$ at which they were measured during performance of the second step during the i-th reference run $RR_i$. In each of the figures 2a - 2e the measurement results $MR_{La}{}^{i}(t_j)$, $MR^{i}{}_{Lb}(t_j)$, $MR^{i}{}_{Fa}(t_j)$ of the respective measurement device 19, 21, 23 are indicated by crosses.

According to the invention, each model set up for a step of the process comprises primary, secondary and tertiary models.

Primary models are set up for at least one, preferably for all measurement devices MD involved in the performance of the step to be monitored. Each primary model represents a time dependency of the measurement results $MR_{MD}$ of the respective measurement device MD to be expected during faultless performance of the step. This time dependency is determined for each measurement device MD involved by determining a basic function $f_{MD}(t; C_{MD})$ of time t and a set of coefficients $C_{MD}$ comprising one or more coefficients $C_{MD1}, .., C_{MDk}$, representing the time dependency of the measurement results $MR_{MD}$ of the respective measurement device MD during performance of the respective step to be expected during faultless performance of the respective step. Since faultless performance of the step is assumed for all reference runs $RRi$, the basic functions $f_{MD}(t; C_{MD})$ can be determined solely based on the measurement results $MR^{i}{}_{MD}(t_j)$ obtained by the respective measurement device MD during performance of the respective step during the reference runs $RR_i$. To this extend known mathematical methods for determining functional dependencies can be applied to the find the type of function, which best represents the time dependency exhibited during the reference runs $RR_i$. These methods are preferably implemented in software, which is run on the computing means 29. Depending on the type of process step and the measurement device MD concerned, the most suitable basic function $f_{MD}(t, C_{MD})$ can e.g. be a polynomial of a given order, an exponential function, a logarithmic function, or any other mathematical function of time.

In case the time dependency to be expected of the measurement results $MR_{MD}$ of a certain measurement device MD involved in this step is known, due to further knowledge about this step, this known time dependency can be used to determine the basic function $f_{MD}(t, C_{MD})$, instead.

In the present example, the container 3 is cylindrical and the component is supplied by a pump operating at a constant pumping rate.

In consequence the flow F through the first inlet pipe 7 is expected to be constant and the level L inside the container 5 is expected to rise linearly with time throughout the performance of the first step. Thus a constant basic function $f_{Fa}(t)$ = $c_{Fa1}$ having a set of only one coefficient $c_{Fa1}$ representing the constant flow, is most suitable to describe the time dependency of the measurement results $MR_{Fa}(t_j)$ of the first flow meter 29 during performance of the first step. Correspondingly a linear basic function $f_{La}(t) = c_{La1} + c_{La2} t$; $f_{Lb}(t) = c_{Lb1} + c_{Lb2} t$ having a set of two coefficients $(c_{La1}, c_{La2})$; $(c_{Lb1}, c_{Lb2})$ is most suitable to describe the time dependency of the measurement results $MR_{La}(t_j)$ of the first level measurement device 19 and the measurement results $MR_{Lb}(t_j)$ of the second level measurement device 21 during performance of the first step.

During proper performance of the second step of agitating the product, the level inside the container 3, will remain constant. Thus constant basic functions $f_{La}(t) = c_{La1}$; $f_{Lb}(t) = c_{Lb1}$ having a set of only one coefficient $(c_{La1})$; $(c_{Lb1})$ are most suitable to describe the time dependency of the measurement results $MR_{La}(t_j)$, $MR_{Lb}(t_j)$ of the first and the second level measurement device 19, 21 during performance of the second step.

For each primary model, a first property K1 is defined, which is given by a set of fitted coefficients $D_{MD}$ determined by best fitting the basic function $f_{MD}(t; C_{MD})$ determined for this measurement device MD to the measurement results $MR_{MD}(t_j)$ obtained by the corresponding measurement device MD during a monitored performance of the respective step. The sets of fitted coefficients $D_{MD}$ can for example be determined by minimizing the differences between the measurement results $MR_{MD}(t_j)$ obtained by the respective measurement device MD during performance of the respective step during the respective run and the values $V_{MD}(t_j) = f_{MD}(t_j; C_{MD})$ rendered by the corresponding basic function $f_{MD}(t_j; C_{MD})$ of time t and the set of coefficients $C_{MD}$ at the same time of measurement $t_j$, e.g. by applying the least square method.

Next for each first property K1 pertinent to one of the measurement devices MD involved in the performance of the step to be monitored, the corresponding reference range $R_{K1}$ is determined. This is preferably done by determining a set of fitted coefficients $D^{i}{}_{MD}$ by best fitting the basic function $f_{MD}(t; C_{MD})$ to the measurement results $MR^{i}{}_{MD}(t_j)$ obtained

by the corresponding measurement device MD during the performance of the step for each of the reference runs RRi. Thus for each basic function $f_{MD}(t_j; C_{MD})$ a number of sets of fitted coefficients $D^i_{MD}$ is determined, which is equal to the number p of reference run RRi available.

Fig. 2a 2c show the fitted functions $f^i_{La}(t) = d^i_{La1} + d^i_{La2} t$; $f^iL_b(t) = d^i_{Lb1} + d^i_{Lb2} t$; $f^i_{Fa}(t) = d^i_{Fa}$ obtained by best fitting the measurement results $MR^iL_a(t_j)$; $MR^iL_b(t_j)$; $MR^i_{Fa}(t_j)$ obtained by the first level measurement device 19, the second level measurement device 21 and the flow meter 23 during performance of the first step during the i-th reference run RRi to the respective basic function $f_{La}(t_j, C_{La1})$; $f_{Lb}(t_j, C_{Lb1})$; $f_{Fa}(tj, C_{Fa})$. In Fig. 3a-c the corresponding sets of fitted coefficients $D^i_{La1} = (d^i_{La1}, d^i_{La2})$; $D^i_{Lb1} = (d^i_{Lb1}, d^i_{Lb2})$; $D^i_{Fa} = (d^i_{Fa})$ are indicated by a cross in a coordinate system defined by the coefficients $(c_{La1}, c_{La2})$; $(c_{Lb1}, c_{Lb2})$; $(c_{Fa})$ of the respective basic function $f_{La}(t_j, C_{La1})$; $f_{Lb}(t_j, C_{Lb1})$; $f_{Fa}(tj, C_{Fa})$.

Fig. 2d-e show the fitted functions $f^i_{La}(t) = d^i_{La1}$; $f^iL_b(t) = d^i_{Lb1}$ obtained by best fitting the measurement results $MR^i_{La}(t_j)$; $MR^iL_b(t_j)$ obtained by the first and the second level measurement device 19, 21 during performance of the second step during the i-th reference run RRi to the respective basic function $f_{La}(t_j, C_{La1})$; $f_{Lb}(tj, C_{Lb1})$. In Fig. 3d-e the corresponding fitted coefficient $(d^i_{La1})$; $(d^iL_{b1})$ is indicated by a cross in a coordinate system defined by the coefficient $(c_{La1})$; $(c_{Lb1})$ of the corresponding basic function $f_{La}(t_j, C_{La1})$; $f_{Lb}(tj, C_{Lb1})$.

For each measurement device MD, each of the determined sets of fitted coefficients $D^i_{MD}$ comprises a fixed number of k fitted coefficients $(d^i_{MD1}, .., d^i_{MDk})$, forming a point in a k-dimensional space opened by the coefficients $(c_{MD1}, .., c_{MDK})$ of the corresponding basic function $f_{MD}(t_j, C_{MD})$. Together, the sets of fitted coefficients $D^i_{MD}$ determined for a measurement device MD for each of the reference runs RRi form a k-dimensional distribution, which is located in a limited coefficient region of the k-dimensional space, indicated by gray dotted areas in figures 3a-e. Since the sets of fitted coefficients $D^i_{MD}$ are determined based on the measurement results $MR^i_{MD}$ of the reference runs RRi, the sets of fitted coefficients $D^i_{MD}$ exhibit a distribution in this k-dimensional coordinate system, which is representative of faultless performance of this step. For each measurement device MD involved, the reference range $R_{K1}$ for the respective first property K1 is determined based on the distribution of the sets of fitted coefficients $D^i_{MD}$ determined for this measurement device MD for each of the reference runs RRi. Each reference range $R_{K1}$ is preferably determined based on a probability of a first property K1, given by the corresponding set of fitted coefficients $D_{MD}$, determined during a monitored run to belong to the distribution of the corresponding sets of fitted coefficients $D^i_{MD}$ representing faultless performance of the respective step.

For each primary model, it is preferably determined whether the distribution of the sets of coefficients $D^i_{MD}$ is a Gaussian distribution. To this extent known normality tests can be applied, which can be implemented in software to be performed by the monitoring unit 25. If the distribution is Gaussian, the probability of a respective first property K1 to belong to this distribution is preferably determined as a Mahalanobis distance following a chi-square distribution. If the distribution of the sets of coefficients $D^i_{MD}$ is found not to be a Gaussian distribution, an isoprobabilistic data transformation is preferably performed, transferring the sets of fitted coefficients $D^i_{MD}$ determined for all the reference runs RRi into to a coordinate system, wherein they exhibit a Gaussion distribution. In this coordinate system the probability of a first property K1 to belong to the corresponding distribution representing faultless performance can then again be determined as a Mahalanobis distance.

Instead of the described method of determining the probability of a first property K1 to belong to respective distribution based on the Mahalanobis distance, alternative methods known in mathematics, in particular mathematical methods of testing a hypothesis of a data sample to belong to a given distribution, can be applied.

Each reference range $R_{K1}$ is preferably determined such, that it includes all sets of fitted coefficients $D^i_{MD}$ for which the probability to belong to respective distribution of sets of fitted coefficients $D^i_{MD}$ representing faultless performance of the respective step is larger than or equal to a predetermined probability threshold. The probability thresholds defining the reference ranges $R_{K1}$ are preferably chosen to best suit the requirements prevailing for the step and/or on the site, in particular the security requirements applicable to the site, as well as the financial risk involved in the performance of a process, which renders a production result, which is not compliant to the quality requirements specified for it. As a general rule lower probability thresholds are applied for steps and/or sites for which lower security requirements and lower financial risks are applicable, and higher probability thresholds are set for steps and/or sites for which higher security requirements or higher financial risks are applicable.

Each reference range $R_{K1}$ can either be stored in the memory 27 as a limited coefficient region determined based on the probability threshold, or they can be stored in form of the probability threshold and software capable of determining the probability of a first property K1 determined for a monitored performance of the step to belong to the corresponding distribution of sets of fitted coefficients $D^i_{MD}$.

In addition, the probability of a first property K1 determined during a monitored run of the process to belong to the corresponding distribution of sets of fitted coefficients $D^i_{MD}$ representing faultless performance of the respective step of the process can be used to classify the first property K1 according to its probability of occurrence during faultless performance of the step. In case it has a lower probability of occurrence during faultless performance, there is a correspondingly higher probability, that a gradual change occurred, which may eventually lead up to fault. In this case the monitoring unit 25 can be set up, to issue a corresponding warning.

Next a secondary model is set up for at least one, preferably all measurement devices MD involved in the performance of the step, for which a primary model has been set up. Each secondary model comprises a second property K2, given by a dispersion of the residues $\Delta_{MD}(t_j)$ between the measurement results $MR_{MD}$ obtained during a performance of the step and the corresponding fitted function $f_{MD}(t, D_{MD})$. If for example j=1,...,n measurements are made at corresponding times $t_j$ during a performance of the step, the dispersion comprises n residues $\Delta_{MD}(t_j)$, with j= 1,..., n each given by:

$$\Delta_{MD}(t_j) = MR_{MD}(t_j) - f_{MD}(t_j; D_{MD})$$

wherein each residue $\Delta_{MD}(t_j)$ is given by the difference between the measurement result $MR_{MD}(t_j)$ and the corresponding value rendered by the fitted function $F_{MD}(t_j; D_{MD})$ at the respective time of measurement $t_j$.

For each second property K2, the secondary model comprises a probability distribution $PDF_{MD}(\Delta_{MD})$ of the residues $\Delta_{MD}$, representing the probabilities of residues $\Delta_{MD}$ to occur during a faultless performance of the step, as a function of their size. Preferably not only the probability distributions $PDF_{MD}(\Delta_{MD})$ of the residues $\Delta_{MD}$ to be expected during faultless performance of the step are determined, but also at least one of their moments of higher order, e.g. at least their moment of order 2, given by the variance $\sigma^2_{MD}$.

Since faultless performance of the step is assumed for all reference runs RRi, the probability distribution $PDF_{MD}(\Delta_{MD})$ of the residues $\Delta_{MD}$ to be expected during faultless performance of the step can be determined based on the dispersions of the residues $A^i_{MD}(t_j)$ between the measurement results $MR^{RRi}_{MD}$ obtained by the respective measurement device MD during performance of the respective step and the corresponding fitted function $f_{MD}(t, D_{MD})$ determined for all reference runs RRi. In order to determine the probability distribution $PDF(\Delta_{MD})$ of the residues $\Delta_{MD}$ to be expected during faultless performance of the step for a specific measurement device MD it can be tested mathematically, whether the distribution of all residues $\Delta^i_{MD}$ determined for this measurement device MD throughout all reference runs RRi can be described by a known probability distribution function, e.g. a Gaussian or Weibull probability density function. To this extent, known tests, e.g. the Shapiro Wilk Test, for testing whether a data set exhibits a Gaussian distribution, can be applied.

In the example shown, the probability distributions of the residues $\Delta^i_{La}$, $A^i_{Lb}$, $\Delta^i_{Fa}$ determined for the first and the second level measurement device 19, 21 and the first flow meter 23 are Gaussian distributions. The corresponding probability density functions $PDF_{La}(\Delta_{La})$, $PDF_{Lb}(\Delta_{Lb})$ and $PDF_{Fa}(\Delta_{Fa})$ are shown in Fig. 4a, 4b, 4c.

In case the probability distribution $PDF(\Delta_{MD})$ of the residues $\Delta_{MD}$ is found to exhibit a known, but not Gaussian type of distribution, a data transformation, e.g. an iso-probabilistic transformation, is preferably performed, transferring the residues $\Delta^i_{MD}(t_j)$ determined for all the reference runs RRi into to a coordinate system, wherein they exhibit a Gaussian distribution. Obviously, the same transformation will then later on have to be applied to the residues $\Delta_{MD}(t_j)$ determined during the monitored runs.

In case no known type of probability distribution function, suitable of describing the probability distribution $PDF_{MD}(\Delta_{MD})$ of the residues $\Delta_{MD}$ determined for a measurement device MD can be found, an empirical probability distribution is used instead, which can be established based on the residues $\Delta^i_{MD}$ determined for all reference runs RRi. Examples of such empirical probability distributions are shown in Fig. 4d and 4e representing the normalized frequency distribution of the residues $\Delta^i_{La}$, $\Delta^i_{Lb}$ determined based on the measurement results $MR^i_{La}$, $MR^i_{Lb}$ of the first and the second level measurement device 19, 21 during performance of the second step during all reference RRi as a function of the size of the respective residues $\Delta_{La}$, $\Delta_{Lb}$.

During monitoring of a step the monitoring unit 25 will for each measurement device MD determine the second property K2 given by the dispersion of the residues $\Delta_{MD}(t_j)$ obtained based on the measurement results $MR_{MD}$ of the monitored run and the corresponding fitted $f_{MD}(t; D_{MD})$, and compare it to the corresponding reference range $R_{K2}$.

The reference ranges $R_{K2}$ for the second properties K2 are preferably determined based on a probability of a second property K2 determined during a monitored run, to belong to the corresponding probability distribution $PDF_{MD}(\Delta_{MD})$ of the residues $\Delta_{MD}$ representative of faultless performance of the respective step. Like described above with respect to the first properties K1 of the primary models, a predetermined probability threshold can be applied, in order to determine each reference range $R_{K2}$ for the respective second property K2, such that it will include all dispersions of residues $\Delta_{MD}$, for which the probability to belong to the the corresponding probability distribution $PDF(\Delta_{MD})$ of residues $\Delta_{MD}$ representative of faultless performance is larger than or equal to the predetermined probability threshold.

In case the probability distribution $PDF(\Delta_{MD})$ of residues $\Delta_{MD}$ representative of faultless performance is a Gaussian distribution, or can be transformed into Gaussian distribution, e.g. by isoprobabilistic data transformation, the corresponding reference range $R_{K2}$ can e.g. be defined as a reference range $R_{K2a}$ for a variance $\sigma^2_{MD}$ of the dispersion of residues $\Delta_{MD}$ given by K2, comprising all variances $\sigma^2_{MD}$ of dispersions of residues $\Delta_{MD}$, for which the probability to occur during faultless performance of the step is larger or equal to a predetermined probability threshold. These reference ranges $R_{K2}$ are preferably determined based on F-Tests suitable of comparing variances of normally distributed populations.

In case the probability distribution $PDF(\Delta_{MD})$ of residues $\Delta_{MD}$ representative of faultless performance is an empirical distribution, the reference range $R_{K2}$ can be determined based on the Kolmogorov-Smirnov statistic by testing the hypothesis that a second property K2 given by the dispersion of the residues $\Delta_{MD}(t_j)$ corresponds to a distribution, which is identical to the corresponding distribution $PDF(\Delta_{MD})$ of residues $\Delta_{MD}$ representing faultless performance of the step.

The probability of a second property K2 determined during monitoring to belong to the corresponding probability distribution $PDF_{MD}(\Delta_{MD})$ representing faultless performance of the respective step of the process can be used to classify second properties K2 determined for monitored runs according to their probability of occurrence during faultless performance of the step. In case a second property K2 has a lower probability of occuring during faultless performance, there is a correspondingly higher probability, that a gradual change occurred, which may eventually lead up to fault. In this case the monitoring unit 25 can be set up to issue a corresponding warning.

In addition, tertiary models are set up for pairs of measurement devices MDa, MDb involved in the performance of the step, which render correlated measurement results $MR_{MDa}$, $MR_{MDb}$ during faultless performances of the respective step. Each tertiary model comprises a third property K3, given by a degree of correlation $Corr(MDa, MDb)$ between simultaneously obtained measurement results $MR_{MDa}$, $MR_{MDb}$ of the respective pair of measurement devices MDa, MDb obtained during performance of the respective step of the process, and a corresponding reference range $R_{K3}$.

The most simple way to determine the degree of correlation between simultaneously obtained measurement results $MR_{MDa}$, $MR_{MDb}$ of two different measurement devices $MD_a$, $MD_b$ during a single performance of a step during a monitored run of the process is given by calculating the corresponding correlation coefficient $Corr(MD_a, MD_b)$ given by:

$$Corr\left(MD_a, MD_b\right) = \frac{\sum_{j=1..n}\left(MR_{MDa}\left(t_j\right) - \overline{MR_{MDa}}\right)\left(MR_{MDb}\left(t_j\right) - \overline{MR_{MDb}}\right)}{\sqrt{\sum_{j=1..n}\left(MR_{MDa}\left(t_j\right) - \overline{MR_{MDa}}\right)^2 \sum_{j=1..n}\left(MR_{MDb}\left(t_j\right) - \overline{MR_{MDb}}\right)^2}}$$

wherein

$t_j$     are the times at which the measurements were made during the respective run during performance of the step,

$MR_{MDa}$     denominates the average of all measurement results $MR_{MDa}(t_j)$ obtained by measurement device MDa during the performance of the step during this run; and

$MR_{MDb}$     denominates the average of all measurement results $MR_{MDb}(t_j)$ obtained by measurement device MDb during the performance of the step during this run.

In order to set up the tertiary models, those pairs of measurement devices MDa, MDb have to be identified, which render correlated measurement results $MR_{MDa}$, $MR_{MDb}$ during faultless performance of the step. To this extend, the degree of correlation $Corr^i(MD_a, MD_b)$ of the measurement results $MR^i_{MDa}$, $MR^i_{MDb}$ of each possible pair of measurement devices MDa, MDb during performance of the respective step of the process is determined for each of the reference runs RRi. For each pair of measurement devices MDa, MDb, the degrees of correlation $Corr^i(MDa, MDb)$ determined for the respective pair during performance of the respective step for all reference run RRi render a reference distribution of the degrees of correlation $Corr(MDa, MDb)$ to be expected during faultless performance of the step. In the most simple case, the degree of correlation $Corr(MD_a, MD_b)$ of a pair to be expected during faultless performance of the respective step can be determined to be equal to an average $A(MDa, MDb)$ of the degrees of correlation $Corr^i(MD_a, MD_b)$ of the corresponding reference distribution of degrees of correlation.

Next, for each pair of measurement devices MDa, MDb it is determined, whether the average $A(MDa, MDb)$ of the degrees of correlation $Corr^i(MD_a, MD_b)$ determined for this pair (MDa, MDb) is indicative of a significant degree correlation. This is preferably done by testing the hypothesis, that the average $A(MDa, MDb)$ is unequal to zero by applying T-statistics methods originally developed by Students. Following these known methods, the average A is considered to be significantly different from zero in case an observed quantity $t_{obs}(MDa, MDb)$, given by:

$$t_{obs}(\mathrm{MDa},\mathrm{MDb})=\left|A(MDa,MDb)\right|\sqrt{\frac{m}{1-A(MDa,MDb)^2}}$$

wherein

m  denominates the degrees of freedom given by p(n-2)
p  equals the number of reference runs RRi, and
n  equals the number of measurement results ($MR_{MDa}(t_j)$, $MR_{MDb}(t_j)$ obtained during each reference run RRi.

exceeds a reference interval given by the T-Statistic with a given level of confidence.

Obviously more sophisticated methods of determining degrees of correlation, e.g. the calculation of joint probability density functions, can be applied to determine the degrees of correlation of measurement results $MR_{MDa}$, $MR_{MDb}$ of pairs of measurement devices MDa, MDb, and to identify those pairs of measurement devices MDa, MDb, which render correlated measurement results $MR_{MDa}$, $MR_{MDb}$ during faultless performance of the step.

Following this, the reference ranges $R_{K3}$ for the degrees of correlation K3= Corr(MDa, MDb) of the correlated measurement device MDa, MDb are determined based on the respective reference distributions. Again, this is preferably done based on a probability for a degree of correlation K3=Corr(MDa, MDb), determined for a monitored run, to belong to the corresponding reference distribution.

The determination of the reference ranges $R_{K3}$ and the comparison of the third properties K3 to the corresponding reference ranges $R_{K3}$ is preferably performed based on the above mentioned T-Statistics. To this extent a coordinate transformation is applied transforming the degrees of correlation K3 = Corr(MDa, MDb) into a coordinate system, wherein differences of degrees of correlation follow a standardized Gaussian distribution. The transformation is e.g. given by:

$$K3'=\left|z-\xi_0\right|\sqrt{n-3}$$

wherein

$$z=\frac{1}{2}\ln\left(\frac{1+K3}{1-K3}\right) \text{ and } \xi_0=\frac{1}{2}\ln\left(\frac{1+A}{1-A}\right)$$

In this coordinate system, the reference range $R_{K3}$ can be easily defined, such that it includes all degrees correlations K3' for which the probability to occur within the Gaussian distribution is larger or equal to the predetermined probability threshold. In consequence, a property K3 determined for a monitored run is found to exceed the reference range $R_{K3}$ in case based, on the T-statistic, it is found to exceed the reference range $R_{K3}$ determined based on the Gaussian distribution with a given level of confidence.

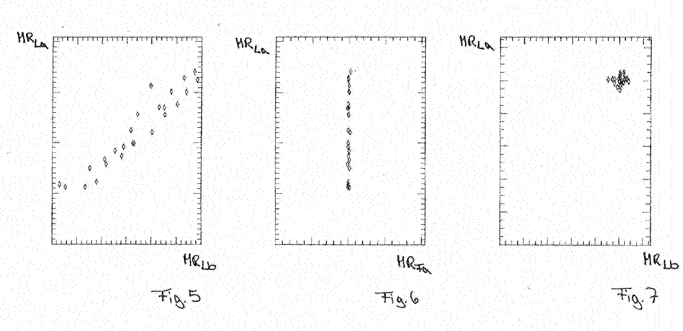

In the present example it is obvious, that the simultaneously obtained measurement results $MR_{La}$, $MR_{Lb}$ of the two level measurement devices 19, 21 measuring the same level L present at the time inside the container 5 should be the same and thus be highly correlated. The corresponding distinct correlation pattern related to the performance of the first step is visualized in Fig. 5 showing each measurement result $MR^i{}_{La}(t_j)$ of the first level measurement device 19 obtained during performance of the first step as a function of the simultaneously measured measurement result $MR^i{}_{Lb}(t_j)$ of the second level measurement device 21 for a number of recorded reference runs $RR_i$.

An increase of the flow into the container 5 causes a the level inside the container 5 to rise quicker and vice versa. In consequence, the the measurement results $MR_{La}$, $MR_{Lb}$ of each of the level measurement devices 19, 21 and the simultaneously obtained measurement results $MR_{Fa}$ of the flow meter 23 are correlated during the first step. A corresponding distinct correlation pattern is visualized in Fig. 6 showing each measurement result $MR^i{}_{La}(t_j)$ of the first level measurement device 19 obtained during performance of the first step as a function of the simultaneously measured measurement result $MR^i{}_{Fa}(t_j)$ of the flow meter 23 for several recorded reference runs $RR_i$.

In addition Fig. 7 visualizes the distinct correlation pattern of the correlation between the measurement results $MR^i{}_{La}$, $MR^i{}_{LB}$ of the first and the second level measurement device 19, 21 during performance of the second step by showing each measurement result $La^i(t_j)$ of the first level measurement device 19 obtained during performance of the first step as a function of the simultaneously measured measurement result $Lb^i(t_j)$ of the second level measurement device 21 for several recorded reference runs $RR_i$.

On more complex sites not all measurement results will be correlated. As an example measurement results of a ph-sensor measuring acidity of the product in the container 5 during the first step would not be correlated to the measurement results $MR_{La}$, $MR_{Lb}$ of the level measurement devices 19, 21, nor would they be correlated to the measurement results $MR_{Fa}$ of the first flow meter 23. Thus a visualization of the measurement results $MR^i_{La}(t_j)$ of the first level measurement device 25 obtained during performance of the process step as a function of the simultaneously measured acidity for all recorded reference runs $RR_i$ would not exhibit a recognizable pattern.

For each pair of measurement devices MDa, MDb found to produce significantly correlated measurement results $MR_{MDa}$, $MR_{MDb}$ during faultless performance of the step, a model of the corresponding correlation pattern to be expected during faultless performance of the step can be determined and recorded in the monitoring unit 25 as part of the tertiary model. These correlation patterns can be visualized in a diagram showing the measurement results $MR_{MDa}$ of one of the measurement devices MDa of the respective pair as a function of the simultaneously obtained measurement results $MR_{MDb}$ of the other measurement device MDb of the pair, and/or be described by a corresponding mathematical model representing the correlation pattern. The mathematical model can comprise a model function, describing the shape of the pattern, and/or mathematically determinable properties thereof.

Together, the primary, the secondary and the tertiary models pertinent to a step of the process provide a precise image of what is to be expected for a faultless performance of the step. Thus the performance of this step during a subsequent monitored run of the process on the site, can be monitored by the monitoring unit 25 based on this image. To this extent the measurement results $MR_{MD}(t_j)$ obtained by the measurement devices MD involved in the present performance of the step are recorded in the same way as described above with respect to the measurement results obtained during the reference runs RRi. Based on the measurement results $MR_{MD}(t_j)$ obtained during the present run, it is then determined, whether a deviation from the image of a faultless performance occurred, which is indicative of a fault. Thus a fault is indicated, in all cases where at least one of the properties K determined based on the measurement results $MR^{PR}_{MD}(t_j)$ of the monitored run exceeds the corresponding reference range $R_K$.

Obviously, the size of the deviation caused by a certain type of disturbance, depends on the size of the disturbance. Whether a disturbance of a certain size is recognized by the monitoring unit 25 as a fault, depends on the impact of the disturbance on the monitored properties K in relation to the corresponding reference ranges $R_K$. Due to the combined use of the primary, the secondary and the tertiary models, the monitoring unit 25 is capable of detecting faults due to any disturbance large enough, to cause at least one of the properties K to exceed the corresponding reference range $R_K$.

As shown by the following examples of disturbances the combination of the three levels of monitoring provided by the primary, secondary and tertiary models form a powerful tool for detecting disturbances at a very early stage. One example of a disturbance, which might occur during a disturbed run of the process is a leakage occurring during the first step of filling the container 3. This disturbance can be due to various root causes, e.g. due to a hole the container 3 or due to the valve 17 not closing properly. Due to the leakage the level L inside the container 3 does not rise as quickly as it should. In consequence the level measurement results $MR_{La}$ obtained by the first level measurement device 19 during the disturbed run are lower than they should be and the slope of the fitted function $f_{La}(t, D_{La})$ fitted to these measurement results $MR_{La}$ is lower than it should be. Fig. 1a shows one example of such measurement results $MR_{La}$ indicated by triangles. The corresponding set of fitted coefficients $D_{La}$ is indicated by a triangle in Fig. 2a. If the leakage is fairly small, it will have a small, hardly noticeable effect on the measurement results $MR_{La}$ and the dispersion of residues $\Delta_{La}$ will not exceed the threshold $R_{K2}$ shown in Fig. 3a. Also this disturbance does not affect the degree of correlation between the measurement results $MR_{Fa}$, $MR_{La}$, of the flow meter 23 and the first level measurement device 19, the measurement results $MR_{Fa}$, $MR_{Lb}$ of the flow meter 23 and the second level measurement device 21, nor between the measurement results $MR_{La}$, $MR_{Lb}$ of the first and the second level measurement device 19, 21. This type of disturbance does however have a larger effect on the slope $d_{La1}$ of the fitted function $f_{La}(t, D_{La})$, which causes the set of fitted coefficients $D_{La}$ indicated by a triangle in Fig. 2b to exceed the corresponding reference range $R_{K2}$.

Another example of a disturbance is a defective measurement device MD rendering non accurate measurement results $MR_{MD}$. Since this type of disturbance solely affects the measurement results $MR_{MD}$ of the defective device, it will have a large impact on the degree of correlation between the measurement results $MR_{MD}$ of the defective device and any other measurement device MD, which during faultless performance would render correlated measurement results $MR_{MD}$. Thus a reduced degree of correlation determined for a pair of measurement devices MD, which normally renders correlated measurement results $MR_{MDa}$, $MR_{MDb}$, during a monitored run is a clear indication of a disturbance pertinent to one of the measurement devices MD of the pair. In addition, depending on the size of the measurement errors, the properties K1, K2 determined based on the measurement results $MR_{MD}$ of the defective measurement device MD will exceed the corresponding reference ranges $R_{K1}$, $R_{K2}$ for the sets of fitted coefficients $D_{MD}$, and/or the dispersion of residues $\Delta_{MD}$.

Another example of a disturbance is a leakage occurring during agitation. Due to the agitation level measurement results $MR_{La}$, $MR_{Lb}$ obtained during agitation show large fluctuations. Thus on the basis of the primary models, only larger leakages can be detected based on the reference ranges $R_{K1}$ for the sets of fitted coefficients $D_{La}$, $D_{Lb}$ for the level measurement devices 19, 21. A leakage will however have a much larger effect on the residues $\Delta_{LA}$, $\Delta_{Lb}$ between

the measurement results $MR_{La}$, $MR_{Lb}$ obtained by the level measurement devices 19, 21 and the corresponding fitted function $f(t, D_{La})$, $f(t, D_{Lb})$, and will thus be detected at a much earlier state based on the second properties K2.

MODEL TESTING AND RISK ANALYSIS

Once the model has been set up, and the properties K to be monitored as well as the corresponding reference ranges $R_K$ have been determined, the effectiveness of the model with respect to the detection of faults caused by selected types of disturbances is preferably tested during a test phase. The selected types of disturbances are preferably those, that cause the most severe consequences.

If available, the selection can be made based on a failure mode cause and effects analysis (FMEA) or a failure mode cause and effects and criticality analysis (FMECA) performed for the site, listing types of disturbances, their consequences, as well as possible root causes and suitable remedies.

In order to determine the effectiveness of the monitoring with respect to a selected disturbance, the impact of the selected type of disturbance on the monitored properties K is analyzed in relation to the size of the respective disturbance. As can be seen from the examples described above, different types of disturbances will have different impacts on different monitored properties K. Whereas a certain type of disturbance may have a large impact on one or more of the properties K, it may have no or only a much smaller impact on other properties K.

The impact of a certain type of disturbance on the monitored properties K can be determined based on measurement results $MR^{DR}_{MD}$ obtained during performances of disturbed runs DR of the process, during which a disturbance of this type has been voluntarily induced. In addition or alternatively corresponding measurement results $MR^{DR}_{MD}$ to be expected during performances of the process suffering from the respective disturbance can be generated by numerical simulations. Based on measurement results $MR^{DR}_{MD}$ of a sufficiently large population of disturbed runs DRi, suffering from a disturbance of the same size and type, disturbed primary, secondary and tertiary model are determined in the same way as the primary, secondary and tertiary models representing the faultless performance of the respective step were determined. This is repeated for increasing sizes of the same disturbance.

Next, the disturbed primary, secondary and tertiary models obtained for the different sizes of the same disturbance are compared to the corresponding models representing faultless performance of the step. Based on these comparisons, the impact of the disturbance on all three model levels can be analyzed in relation to the size of disturbance. This analysis is preferably performed by comparing the distributions of the properties K, namely the distributions of the sets of fitted coefficients $D_{MD}$, the probability distributions of the residues ($PDF(\Delta_{MD})$) and the reference distributions of the degrees of correlation ($Corr(MR_{MDa}, MR_{MDb})$), determined based on the measurement results $MR^i_{MD}$ of the reference runs RRi, to the corresponding distributions of the same properties K determined based on the measurement results $MR^{DRi}_{MD}$ of a sufficiently high number of disturbed runs DRi, suffering from the disturbance of the same type and size. Based on the distributions of the properties K determined based on the measurement results $MR^{DRi}_{MD}$ of the disturbed runs DRi suffering from increasing sizes of disturbances of the selected types and the reference ranges $R_K$ determined for the monitored properties K based on the reference runs RRi, a confidence level $\alpha$ for detecting a fault, in case a disturbance of this type and this size or larger is present, can be determined. In addition, the corresponding probability $\beta$ for not detecting a fault, even though a disturbance of this type and this size is present, can be determined.

MONITORING AND VALIDATION

During normal operation of the site, the monitoring unit 25 will continuously monitor the steps of the process performed on the site. For each step, it will receive the measurement results $MR^{PR}_{MD}$ of the measurement devices MD involved in the performance of the respective step, and will determined the corresponding properties K related to the primary, secondary and tertiary models of the respective step. If during monitored operation of the site at least one of the properties K exceeds the corresponding reference range $R_K$, the monitoring unit 25 will indicate a fault.

It is an advantage of the invention, that faults are detected immediately after completion of the respective step. This allows the operator to take immediate actions. In particular he can stop further processing of the intermediate product produced in this step, in order to avoid investing further production time and resources in further processing of the intermediate product, which after completion of the entire process would render an end product which does not comply to the quality standards required for it.

In case none of the properties K exceeds the corresponding reference range $R_K$, the performance of the step will be validated. In these cases, validation is granted immediately after performance of the respective step, ensuring the operator of the site, that this step was performed properly before time and resources are invested in further processing the result produced by the respective step. In addition, the reliability of granted validations can be quantified with respect to those disturbance, for which the model has been tested and the risk analysis has been performed, based on the respective confidence levels $\alpha$ for detecting a fault, in case a disturbance of the respective type and size or larger is present, and the corresponding probabilities $\beta$ of not detecting a fault, even though a disturbance of one of the respective types and sizes is present.

In addition, the measurement results $MR_{MD}$ obtained during validated performances of the respective step are preferably recorded as additional validated test runs, which can then be applied in the same way as the validated test runs performed during the preparatory phase, in order to refine the primary, secondary and tertiary models representing faultless performance of the step. In order to prevent gradual changes occurring on the site, which may eventually develop into a disturbance of noticeable size, to affect the model of the respective step, a number of validated test runs are collected, and it is tested whether the dispersions of the properties K determined based on the measurement results $MR_{MD}$ of the validated test runs are compliant to the corresponding distributions of the previously stored model. If this is the case, the validated test runs are then considered as additional performed reference runs RRi, and the model is updated. Each update is performed in the same way as the original determination of the model for the step, based on a larger number of performed reference runs RRi, given by the newly obtained reference runs RRi and the reference runs RRi performed during the preparatory phase.

DIAGNOSIS

Since different types of disturbances have different impacts on the individual monitored properties K, the properties K determined for a monitored run of the step can not only be used for monitoring purposes, but can also be applied in order to determine root causes that caused the detected faults.

To this extent a diagnosing unit 31 is foreseen on the site, which can either be an integral part of the monitoring unit 25, comprise the monitoring unit 25, or be connected to it. The diagnosing unit 31 comprises a data base 33, for storing data sets related to known types of disturbances, which can occur during the monitored steps of the process. Each data set comprises a known type of disturbance and its impact on each of the monitored properties K. In addition each data set preferably comprises a list of one or more possible root causes, known to cause this type of disturbance. As described above, root causes causing a leakage are e.g. a hole in the pipe 9 or the container 3 or a maladjustment or failure of the valve 17. For each listed root cause, the data set preferably comprises a list of actions, comprising actions directed towards the determination whether the respective root cause is present, and preferably also a remedy suitable of resolving it.

Actions directed towards the determination, whether the root cause is present preferably include well-directed acquisition of further information, directed at enabling the diagnosing unit 31 and/or the operator of the site to determine whether it occurred. Such information may include information, which can be automatically or semi-automatically acquired by the diagnosing unit 31, e.g. by requesting a measurement device MD to perform a self-test and to provide the result thereof to the diagnosing unit 31, e.g. via the control unit 13, or by requesting an automatically operated valve to report its status. In addition such information may include information, that has to be acquired by an operator, who will then preferably provide a corresponding input to the diagnosing unit 31 via an interface of the diagnosing unit 31. As an example, the operator may be requested to check the status of a manually operated appliance, e.g. a pump or valve, or a passive component, e.g. a pipe or container.

In addition the diagnosing unit 31 comprises a computing unit 35 for performing the diagnosis described below, based on input provided by the monitoring unit 25 and the information stored in the data base 33. In addition the diagnosis can be based on input provided by the operator and/or input automatically or semi-automatically acquired by the diagnosing unit 31.

To begin with, the data base can be filled with data sets determined based on the information obtained during the test phase for the selected types of disturbances. To this extent the disturbed primary, secondary and tertiary models determined during the test phase for increasing sizes of the selected disturbances provide a detailed representation of the impact of the respective disturbance on the monitored properties K. In addition any other information available regarding further disturbances, root causes and related actions for the determination of their presence and/or remedies for resolving them, as well as additional diagnostic information, including rules for determining root causes can be added to the data base. Such information can e.g. be extracted from failure mode cause and effects analysis (FMEA) or a failure mode cause and effects and criticality analysis (FMECA) performed for the site, and/or from lists of error codes of possible errors associated with measurement devices capable of performing automatic self-diagnosis. The additional diagnostic information comprises e.g. diagnosing tools and/or methods available for the site or already applied on the site, including calculated or hand-crafted decision trees for the determination of root causes. This additional diagnostic information can for example be applied by the diagnosing unit 31 as supplemental information, for improving the diagnosing capabilities of any diagnosis performed based on the models and the monitored properties K, or as alternative diagnosing means or method, in those cases, where a diagnosis performed based on the models and monitored properties K does not render sufficiently good results.

If more than one measurement device MD of the same type is foreseen on the site, information contained in the data base concerning impairments of one of these devices, can be applied to the entire family. To this extend it can be copied or linked to the respective sections of the data base. Such information may include root causes causing impairments of the type of device, actions for the determination of their presence, remedies for resolving them, as well as any related additional diagnostic information stored with respect to the device.

During normal operation of the site, the monitoring unit 25 will continuously monitor the steps of the process performed on the site, determine the corresponding properties K related to the primary, secondary and tertiary models of the respective step, and indicate a fault, in case at least one of the properties K exceeds the corresponding reference range $R_K$. In case a fault is detected, a diagnosis can be performed. To this extend the properties K determined based on the measurement results $MR_{MD}$ obtained during the faulty performance of the step are transferred to the diagnosing unit 31, which will then search the data base 33 for data sets stored for disturbances, which have an impact on the individual properties K, which matches the properties K determined for the present faulty performance of the respective step of the process.

In case at least one matching disturbance is found, the matching disturbances are indicated, and a root cause analysis is performed based on the matching disturbances. If already available in the data sets, the diagnosing unit 31 will assist this analysis by providing all root causes listed in the data sets of the matching disturbances. In addition any additional diagnostic information stored in the data base, in particular additional diagnostic information related to the matching disturbance, may be applied by the diagnosing unit 31, in order to determine further possible root causes. The diagnosing unit 31 will then preferably recommend the actions listed in the data sets, which are directed towards the determination, whether the respective root causes are present. The diagnosing unit 31 will preferably provide the operator of the site with a suggestion for the most time and cost effective way to determine whether one of these root causes caused the detected fault. To this extend, the recommended actions are preferably recommended in an order corresponding to their availability and the time and cost involved in their performance. Recommended actions, which can be performed automatically, like for example a performance of a self-test of a measurement device MD, can be performed in a fully automated fashion based on a corresponding request issued by the diagnosing unit 31. Others have to be initiated and/or performed by the operator, who will then preferably provide the information obtained by their performance to the diagnosing unit 31.

If possible based on the information acquired by the recommended actions and the information provided by the data sets the diagnosing unit 31, will determine the root cause, and if available in the data set, indicate the remedy suitable to resolve it. Otherwise, the root cause and/or the suitable remedy will have to be determined by the operator, who will preferably provide the determined root cause and/or the suitable remedy to the diagnosing unit 31. In case this way a root cause and/or a remedy for it, is provided to the diagnosing unit 31, which is not already listed in the data set for the respective disturbance, the diagnosing unit 31 will then preferably amend the data base 33 by adding the respective root cause and/or the respective remedy to the corresponding data set. In case a newly added root cause was determined based on a diagnosis of a fault, for which at least two matching disturbances were found, the operator will be requested to determine the matching disturbance, which caused the detected fault, in order to enable the diagnosing unit 31 to store the new root cause in the data set related to this disturbance.

After application of the remedy, consecutive performances of the respective step are monitored, and the performance of the remedy is validated, in case no further fault was detected during a predefined validation time interval. During operation, a success rate for the application of a certain remedy to all cases where the root cause to be resolved by it was identified based on a fault detected based on properties K matching the respective type of disturbance can be determined. If the success rate is high enough, and based on a sufficiently high number of cases, the remedy can be established as a standard remedy for these cases, and if possible, applied automatically.

In case an applied remedy is validated, the measurement results $MR_{MD}$ obtained during the faulty performance of the step can be used as a further disturbed run DRi, suffering from the diagnosed disturbance in order to refine the corresponding disturbed primary, secondary and tertiary models representing this disturbance, in order to obtain a more precise description of the impact of this type of disturbance on the monitored properties K.

In case the monitoring unit 25 detects a further fault, during the validation time interval, this can either be due to a new disturbance, which occurred in the meantime, or due to the fact, that the applied remedy was not successful. In this case, the operator is requested, to evaluate, whether the previously applied remedy was successful and to provide a corresponding input to the diagnosing unit 31. In case the previously applied remedy was not successful, it is possible,

a) that the root cause was not identified correctly,
b) that the root cause was identified correctly, but the corresponding remedy stored in the data for resolving this root cause is not suitable, or
c) that the detected fault occurred due to a different disturbance having the same or a similar impact on the monitored properties K.

In this case the operator is requested to determine which of the three cases a), b) c) occurred, and to provide a corresponding input to the diagnosing unit 31, which will then amend the data base accordingly.

In the first case a) it is possible, that a new root cause occurred, which causes one of the determined disturbances, but is not listed in the corresponding data set. In this case, the new root cause and preferably corresponding actions directed towards the determination of its presence, and a remedy suitable of resolving this new root cause will be added to the corresponding data set. In the second case b) the non-suitable remedy stored in the data set will be replaced by the suitable remedy determined by the operator.

In the third case c) the diagnosing unit 31 will add a new data set for the newly discovered disturbance determined by the operator, preferably comprising its impact on each of the monitored properties K, and preferably also comprising root causes known to cause this disturbance and actions related to these root causes, preferably including actions directed towards the determination of their presence and remedies suitable of resolving them. In order to determine the impact of the newly discovered disturbance, the measurement results $MR_{MD}$ obtained during the performance of the respective step suffering from the newly discovered disturbance are preferably recorded as a disturbed run DR, which is then used in the same way as the disturbed runs were used during the testing phase, in order to determine disturbed primary, secondary and tertiary models for increasing sizes of the newly discovered disturbance which will then provide a detailed representation of the impact of the newly discovered disturbance on the monitored properties K.

In case no matching disturbance can be found, a guided root cause analysis can e.g. be performed based on predefined decision trees to be followed in order to determine the root cause. The use of decision trees is known in the art, and frequently used on industrial sites in order to determine root causes causing disturbances of various kinds. To this extent, any additional diagnostic information stored in the data base can be applied. Root cause analysis can be improved by applying the additional information available due to the present invention. Two very powerful methods of applying this additional information are described below, which can be used in combination or as separate alternatives.

According to the first method, it is determined which of the properties K pertinent to one of the primary, secondary or tertiary models exceeded the corresponding reference range $R_K$, and in which direction they exceeded them. If for example one of the first properties K1, given by the set of fitted coefficients $D_{MD}$ determined for one of the measurement devices MD exceeded the corresponding reference range $R_{K1}$ it can be determined, which of the fitted coefficients $d_{MD1}, ..., d_{MDk}$ were too high or too low. The direction, in which a property K exceeded the reference range can for example be determined based on deviation vector indicative of an angle and a distance between the respective property K and the center of gravity of the respective reference distribution provided by the model.

Next, for each property K, for which the direction in which it exceeded the corresponding reference range $R_K$, was determined, the data base is searched for disturbances which cause the same property K to exceed this reference range $R_K$ in the same or in a similar direction. Based on this, root causes stored in the data base as possible causes of disturbances, which cause the properties K, which exceeded the corresponding reference ranges $R_K$ during the faulty run, to exceed the corresponding reference range $R_K$ in the same or a similar direction, are determined. Since the thus determined root causes cause the respective properties K to change in the same direction, there is a high probability, that one of them may be at least partially responsible for the presently detected fault. In this respect, the root causes are preferably indicated in an order of decreasing similarity between the direction in which the property K exceeded the reference range $R_K$ and the direction in which the root causes cause this property K to exceed the reference range $R_K$. These root causes and the related actions for determining whether they occurred provide a good starting point for the root cause analysis. In addition these root causes provide an indication for the operator, which parts or aspects of the site may have caused the presently detected fault.

According to the second method, it is determined whether a property K1, K2, pertinent to one of the primary or secondary models exceeded the corresponding reference range $K_{R1}$, $K_{R2}$,. A property K1, K2 pertinent to one of the primary or secondary models can exceed the corresponding reference range $R_K$ due to an impairment of the corresponding measurement device MD, e.g. an impairment causing erroneous measurement results $MR_{MD}$, or due to a root cause affecting the quantity measured by the measurement device MD.

An impairment of a measurement device MD, which is large enough, to cause at least one of the properties K1, K2 pertinent to the respective primary or secondary model to exceed the corresponding reference range $R_K$ will also reduce the degrees of correlation K3 between the measurement results $MR_{MD}$ of the impaired measurement device MD and the simultaneously obtained measurement results $MR_{MD}$ of all other measurement devices MD, which render correlated measurement results $MR_{MD}$ during faultless performance of the respective step. Thus the diagnosing unit 31 will determine, whether any of the third properties K3 of the tertiary models defined for this measurement device MD shows a reduced degree of correlation. If this is the case, the diagnosing unit 31 will diagnose, that the fault is due to an impaired measurement device MD and indicate the impaired measurement device MD.

Based on this the operator can then identify the root cause of the impairment and find and apply a suitable remedy to resolve it. In order to support the operator in doing this and/or to automize this process as much as possible, the data base 33 preferably comprises a data set for each of the measurement devices MD involved, comprising a list of possible root causes for impairments of the respective measurement device MD, and preferably also corresponding actions, including actions directed towards the determination of the presence of the respective root causes and remedies suitable of resolving them.

In case a fault is detected, which caused at least one of the properties K1, K2 pertinent to the respective primary or secondary model pertinent to one of the measurement devices MD involved to exceed the corresponding reference range $R_K$, but did not cause a reduction of the degrees of correlation $K3=Corr(MR_{MDa}, MR_{MDb})$ between the measurement results $MR_{MD}$ of this measurement device MD and the simultaneously obtained measurement results $MR_{MD}$ of any other measurement device MD, which should render correlated measurement results $MR_{MD}$ during faultless performance of the respective step, the diagnosing unit 31 will diagnose, that the fault is due to a root cause affecting the property measured by this measurement device MD.

Based on this the operator can then identify the root cause that affected the measured property and find and apply a suitable remedy to resolve it. In order to support the operator in doing this and/or to automate this process as much as possible, the data base 33 preferably comprises a data set for each measured property, comprising a list of possible root causes affecting this measured property, and preferably also corresponding actions, including actions directed towards the determination of the presence of the respective root causes and remedies suitable of resolving them.

To begin with, the lists of possible roots cause for impairments of the measurement device MD and the lists of possible root causes affecting the measured quantities can either be empty or contain previously known data. The data sets can then be gradually filled with further input, provided by the operator, every time he identifies a root cause causing an impairment of one of the measurement devices MD or a root cause affecting one of the measured quantities and finds and applies a suitable remedy to resolve it.

Every time a fault is diagnosed to be due to a root cause causing an impairment of the measurement device MD or a rout cause affecting one of the measured properties, the diagnosing unit 31 can then indicate the corresponding listed root causes a possible root causes, and the determination of the root cause, that caused the fault, and the determination and application of the suitable remedy can then be performed as described above with respect to faults, for which one or more matching disturbances were found.

After identification of a root cause affecting a measured quantity or causing an impairment of a measurement device MD and determination and application of the determined remedy it will then be determined whether the remedy was applied successfully during the validation time interval. In case no further fault was detected during the verification time interval, the application of the remedy will be validated.

In case the remedy was validated, the measurement results $MR_{MD}$ obtained during the performance of the respective step suffering from the disturbance caused by the identified root cause, which was resolved by the validated remedy is preferably recorded as a disturbed run DR, which is then used in the same way as the disturbed runs were used during model testing.

In case the determined root cause caused a disturbance, for which a data set is already stored in the data base 33, it can be used as an additional disturbed run DR, in order to refine the already determined impact of the disturbance on the monitored properties K. In case the determined root cause caused a disturbance, for which no data set has been stored in the data base 33 yet, a new data set is added to the data base, and the disturbed run DR is used as a first disturbed run DR for determining of the impact of the newly added disturbance on the monitored properties K in the same way as described above.

Thus during operation, the the data base will be gradually filled with more and more complete data sets related to a growing number of disturbances, enabling the diagnosing unit 31 to diagnose more and more disturbances, to identify a growing number of root causes and remedies suitable of resolving them.

| 1  | first supply tank |
|----|----|
| 3  | container |
| 5  | inlet pipe |
| 7  | agitator |
| 9  | outlet pipe |
| 11 | receptacle |
| 13 | control unit |
| 15 | valve |
| 17 | valve |
| 19 | first level measurement device |
| 21 | second level measurement device |
| 23 | flow meter |
| 25 | monitoring unit |
| 27 | memory |
| 29 | computing unit |
| 31 | diagnosing unit |
| 33 | data base |
| 35 | computing unit |

**Claims**

1. Method of monitoring performance of at least one step of a predefined process performed on an industrial site comprising means for running said process on said site, including a control unit (13) controlling initiation and performance of steps of said process and measurement devices (MD) involved in the performance of the steps for measuring process related quantities, and further comprising monitoring means comprising:

   - a monitoring unit (25) designed and set up and connected such, that it has real-time access to measurement results ($MR_{MD}(t_j)$) obtained by the measurement devices (MD) involved in the performance of the steps to be monitored and the times ($t_j$) at which they were obtained in relation to a starting time (to) at which performance of the respective process step was started during the respective run, comprising:

     -- a memory (27) storing a model for each step to be monitored, each model comprising:

        a) a primary model for at least some, in particular all measurement devices (MD) involved in the performance of the respective step, each comprising:

           - a basic function ($f_{MD}(t; CMD)$) of time (t) and a set of coefficients (CMD) representing a time dependency of the measurement results ($MR_{MD}$) of the respective measurement device (MD) to be expected during faultless performance of the step,
           - a first property (K1) given by a set of fitted coefficients ($D_{MD}$) determined by best fitting the basic function ($f_{MD}(t; C_{MD})$) to the measurement results ($MR_{MD}$) obtained by the respective measurement device (MD) during a performance of the step, and a reference range ($R_{K1}$) for the first property (K1),

        b) a secondary model for each of the primary models, each comprising a second property (K2) given by a dispersion of residues ($\Delta_{MD}$) between the measurement results ($MR_{MD}$) obtained by the respective measurement device (MD) during a performance of the step and the corresponding fitted function ($f_{MD}(t, D_{MD})$), and a reference range ($R_{K2}$) for the second property (K2), and
        c) tertiary models for pairs of measurement devices (MDa, MDb) involved in the performance of the step, which render correlated measurement results ($MR_{MDa}$, $MR_{MDb}$) during faultless performance of the step, each tertiary model comprising a third property (K3), given by a degree of correlation ($Corr(MR_{MDa}, MR_{MDb})$) between simultaneously obtained measurement results ($MR_{MDa}$, $MR_{MDb}$) of the respective pair during performance of the respective step, and a reference range ($R_{K3}$) for the third property (K3), wherein each of the reference ranges ($R_{K1}, R_{K2}, R_{K3}$) comprises a range for the respective property (K1, K2, K3) within which the respective property (K1, K2, K3) is expected to occur during faultless performance of the step, and

     -- computing means (29) for determining the properties (K) pertinent to the primary, secondary and tertiary models based on the measurement results ($MR(t_j)$) obtained by the measurement devices (MD) involved in the performance of the monitored steps during monitored runs of the process, and for detecting a fault, in case at least one of these properties (K) exceeds the corresponding reference range ($R_K$),

   said method comprising the steps of:

     A) determining said models stored in said memory (27) by a method performed on said site comprising the steps of:

        - performing a number of test runs of the process and determining whether a result produced by the respective test run is compliant to predefined quality requirements,
        - recording the measurement results ($MR^i_{MD}(t_j)$) obtained by measurement devices (MD) involved in the performance of the respective step together with the times ($t_j$) at which they were obtained in relation to a starting time (to) at which the respective process step was started during the respective test run for all test runs, for which compliancy to the quality requirements was determined, as performed reference runs,
        - determining the primary, secondary and tertiary models based on the measurement results ($MR^i_{MD}$) of a population of reference runs (RRi), comprising the performed reference runs or the performed reference runs and simulated reference runs, obtained by simulations performed based on the measurement results ($MR^i_{MD}$) of the performed reference runs, which generate measurement results ($MR^i_{MD}$)

of the measurement devices (MD) to be expected during faultless performance of the step, and

B) monitoring at least one step of said process for which a model has been determined by a method performed on said site comprising the steps of:

- recording the measurement results ($MR^{PR}_{MD}$) obtained by the measurement devices (MD) involved in the performance of the step during performance of the step,
- based on the recorded measurement results ($MR_{MD}$) determining the properties (K) pertinent to the primary, secondary and tertiary models of the respective step, and
- detecting a fault, in case at least one of the properties (K) exceeds the corresponding reference range ($R_K$).

2. Method according to claim 1, comprising the steps of determining each primary model by:

- determining the basic function $f_{MD}(t; C_{MD})$, based on the time dependency of the measurement results ($MR_{MD}^i(t_j)$) obtained by the respective measurement devices (MD) during performance of the respective step during the reference runs (RRi),
- determining the reference range ($R_{K1}$) for each first property (K1) by

-- determining a set of fitted coefficients ($D^i_{MD}$) for each reference run (RRi) by best fitting the respective basic function ($f_{MD}(t; C_{MD})$) to the measurement results ($MR^i_{MD}$) obtained by the respective measurement device (MD) during performance of the step during the respective reference run (RRi),
-- based on a distribution of the determined sets of fitted coefficients ($D^i_{MD}$), determining a probability of a first property (K1) determined during a monitored run to belong to this distribution, and
-- determining the reference range ($R_{K1}$) such, that it includes all first properties (K1), for which the probability to belong to the distribution is larger than or equal to a predetermined probability threshold.

3. Method according to claim 1 to 2, comprising the step of determining the reference range ($R_{K2}$) for each of the second properties (K2) by, for each reference range (RK2):

- determining a dispersion of residues ($\Delta^i_{MD}$) between the measurement results ($MR^i_{MD}$) obtained by the respective measurement device (MD) during performance of the step during one of the reference runs (RRi) and the corresponding fitted function ($f^i_{MD}(t; D^i_{MD})$) determined for this measurement device (MD) for this reference run (RRi) for each of the reference runs (RRi),
- based on all determined dispersion of residues ($\Delta^i_{MD}$) determining a probability distribution ($PDF_{MD}(\Delta_{MD})$) representing the probabilities of residues ($\Delta_{MD}$) to occur during faultless performance of the step as a function of their size, and
- determining the reference range ($R_{K2}$) such, that it includes all second properties (K2), for which the probability to belong to the corresponding probability distribution ($PDF_{MD}(\Delta_{MD})$) is larger than or equal to a predetermined probability threshold, in particular by determining the reference ($R_{K2}$) as a range for a variance ($\sigma^2_{MD}$) of the residues ($\Delta_{MD}$) of the dispersion of residues ($\Delta_{MD}$).

4. Method according to claim 1-3, comprising the steps of:

- identifying pairs of measurement devices ($MD_a$, $MD_b$) involved in the performance of the step which render correlated measurement results ($MR_{MDa}$, $MR_{MDb}$) during faultless performance of the step, in particular identifying them by

-- for each possible pair of measurement devices (MDa, MDb) involved in the performance of the step determining a degree of correlation ($Corr(MR'_{MDa}, MRi_{MDb})$) between their simultaneously obtained measurement results ($MR^i_{MDa}$, $MRi_{MDb}$) during performance of this step for each reference run (RRi), and

- identifying the pairs rendering correlated measurement results ($MR_{MDa}$, $MR_{MDb}$) based on the degrees of correlations ($Corr(MR'MDa, MRi_{MDb})$) determined for all possible pairs for all reference runs (RRi), and
- for each identified pair, determining the reference range ($R_{K3}$) for the respective third property (K3) such, that it includes all respective third properties (K3), for which the probability to belong to a reference distribution given by a distribution of the corresponding degrees of correlations ($Corr(MR^i_{MDa}, MRi_{MDb})$) determined for the respective pair for the reference runs (RRi) is larger than or equal to a predetermined probability threshold.

5. Method according to claim 1 to 4, comprising the step of indicating a warning in case at least one of the determined properties (K1, K2, K3) occurred in a range, which according to a distribution of the respective property (K1,K2, K3), to be expected during faultless performance of the step, in particular a corresponding distribution of sets of fitted coefficients ($D_{MD}$), a corresponding probability distribution of residues ($PDF(\Delta_{MD})$) and a corresponding reference distribution of the degrees of correlation ($Corr(MR_{MDa}, MR_{MDb})$), has a low probability of occurring.

6. Method according to claim 1 to 5, further comprising the steps of determining an impact of a disturbance of a certain type on the properties (K) of the model for a step of the process monitored by the monitoring unit (25) according to claim 1, comprising the step of:

   - recording measurement results ($MR^{DR}_{MD}$) of the measurement devices (MD) involved in the performance of the step during disturbed runs of the process step, during which a disturbance of this type has been voluntarily induced, and/or generating corresponding measurement results ($MR^{DR}_{MD}$) to be expected during performances of this step suffering from the respective disturbance by numerical simulations,
   - determining disturbed primary, secondary and tertiary models in the same way as the primary, secondary and tertiary models representing the faultless performance of the respective step were determined based on recorded and/or generated measurement results ($MR^{DRi}_{MD}$) of a population of disturbed runs (DRi) suffering from disturbances of the same size and type,
   - repeating the determination of the disturbed primary, secondary and tertiary models for increasing sizes of the same type of disturbance,
   - determining the impact of the type of disturbance on the properties (K) of the model by comparing the distributions of the properties (K), in particular the distributions of the sets of fitted coefficients ($D_{MD}$), the probability distribution of the residues ($PDF(\Delta_{MD})$) and the reference distributions of the degrees of correlation ($Corr(MR_{MDa}, MR_{MDb})$), determined based on the measurement results ($MR^i_{MD}$) of the reference runs (RRi) to the corresponding distributions of the same properties (K) determined based on the measurement results ($MR^{DRi}_{MD}$) of the disturbed runs (DRi).

7. Method according to claim 1 to 6, comprising the steps of:

   - validating performances of monitored steps during which no fault was detected,
   - in particular validating them with a reliability determined based on a confidence level ($\alpha$) for detecting a fault, in case a disturbance of a certain type and this size or larger is present, and/or a probability ($\beta$) of not detecting a fault, even though a disturbance of a certain type and this size is present, determined for one or more disturbances,

     -- for which disturbances their impact on the properties (K) has been determined based on the method according to claim 6, and
     -- for which disturbances the confidence level ($\alpha$) and/or the probability ($\beta$) has been determined based on the distributions of the properties (K) determined based on the measurement results ($MR^{DRi}_{MD}$) of the disturbed runs (DRi) suffering from increasing sizes of disturbances of this type and the reference ranges ($R_K$) for the monitored properties (K).

8. Method according to claim 7, comprising the steps of:

   - storing the measurement results ($MR_{MD}$) obtained during validated performances, and
   - updating the model stored in the monitoring unit (25) based on measurement results ($MR_{MD}$) of validated performances of the respective step.

9. Method according to claim 1 to 8, wherein data sets related to known types of disturbances, which can occur during performance of one of the steps for which a model is stored in the memory (27) of the monitoring unit (25) are stored in a data base (33) of a diagnosing unit (31) for performing diagnoses regarding faults detected by said monitoring means, wherein each data set comprises:

   - the type of disturbance, and
   - its impact on each of the monitored properties (K) determined by the method according to claim 6 .

10. Method according to claim 9, wherein at least one data set comprises

- a list of at least one root cause, causing the respective disturbance,
- in particular a list of at least one root cause and a list of at least one action for at least one of the listed root causes, in particular an action directed towards the determination, whether the respective root cause is present, and/or an action given by a remedy suitable of resolving the respective root cause.

**11.** Method according to claim 9 to 10, said method further comprising the step of performing a diagnosis regarding a fault detected by said monitoring means by :

- searching the data base (31) for data sets stored for disturbances, which have an impact on the individual properties (K), which matches the properties (K) determined for the present faulty performance of the respective step of the process, and
- in case at least one matching disturbance is found,

-- determining the root causes stored in the respective data sets, as possible root causes, which may have caused the detected fault, and
-- performing the diagnosis based on the determined possible root causes.

**12.** Method according to claim 9 to 10, said method further comprising the step of performing a diagnosis regarding a fault detected by said monitoring means comprising the steps of:

- searching the data base (31) for data sets stored for disturbances, which have an impact on the individual properties (K), which matches the properties (K) determined for the present faulty performance of the respective step of the process, and
- in case no matching disturbance is found,

-- determining in which direction the properties (K), which exceeded the corresponding reference range ($R_K$), exceeded the corresponding reference range ($R_K$),
-- for each property (K), for which the direction, in which it exceeded the corresponding reference range ($R_K$), was determined, searching the data base for disturbances which cause the same property (K) to exceed this reference range ($R_K$) in the same or a similar direction,
-- determining the root causes stored in the data sets of the disturbances, which cause the respective properties (K) to exceed the corresponding reference range ($R_K$) in the same direction, as possible root causes, and
- performing the diagnosis based on the determined possible root causes.

**13.** Method according to claim 9 or 10, further comprising a method of performing a diagnosis regarding a fault detected by said monitoring means, comprising the steps of:

- in case the first or the second property (K1, K2) determined for one of the measurement devices (MD) involved in the performance of the step exceeded the corresponding reference range ($R_{K1}$, $R_{K2}$) and one of the third properties (K3) related to a tertiary model pertinent to the same measurement device (MD) shows a reduced degree of correlation diagnosing a disturbance pertinent to this measurement device (MD), and/or
- in case the first or the second property (K1, K2) determined for one of the measurement devices (MD) involved in the performance of the step (MD) exceeded the corresponding reference range ($R_{K1}$, $R_{K2}$) and none of the third properties (K3) related to a tertiary model pertinent to the same measurement device (MD) shows a reduced degree of correlation diagnosing a disturbance affecting the quantity measured by this measurement device (MD).

**14.** Method according to claim 11, 12 or 13, wherein

- additional information is stored in the data base (33),
- in particular information on additional disturbances, root causes, actions related to root causes and/or additional diagnostic information, in particular rules for determining root causes, diagnosing tools and/or diagnosing methods, and
- the additional information is applied during performance of the diagnosis, in particular in order to determine the disturbance and/or the root cause that caused the detected fault.

**15.** Method according to claim 11 or 14, , comprising the step of performing a diagnosis regarding a fault detected by said monitoring means comprising the step of: determining the root cause of the detected fault based on the determined possible root causes and the actions directed towards the determination of their presence stored in the data base (33), by performing the actions in an order, in particular an order recommended by the diagnosing unit (31), corresponding to their availability and the time and cost involved in their performance, in particular by having at least one of those actions, which can be performed in an automated fashion on the site, performed in an automated fashion based on a corresponding request issued by the diagnosing unit (31) and/or by having at least one of those actions initiated and/or performed by an operator of the site.

**16.** Method according to claim 11 or 14, comprising the steps of:

- determining the root cause, that caused the presently detected fault,
- applying a remedy to resolve the root cause, and
- during a verification time interval monitoring consecutive performances of the step of the process, and
- validating the applied remedy, in case no further fault was detecting during performances of the respective step during the verification time interval.

**17.** Method according to claim 9 or 10 , further comprising the step of amending the data base (33) of the diagnosing unit (31) by

- adding at least one data set related to a disturbance, which had occurred on the site and was subsequently identified, in particular a data set comprising an impact of this disturbance on the properties (K), in particular an impact determined by the method according to claim 6,
- adding at least one root cause, causing one the disturbances contained in the data base, in particular root causes identified by the operator during operation of the site,
- adding at least one action, related to one of the root causes listed in the data base, in particular an action identified by the operator during operation of the site,
- for at least one property measured by one of the measurement devices (MD) adding a list of at least one root cause, in particular a list of at least one root cause and list of at least one action related to one of the root causes, affecting this measured property, and/or
- for at least one of the measurement devices (MD), adding a list of at least one root cause, in particular a list of at least one root cause and list of at least one action related to one of the root causes, causing an impairment of this measurement device (MD).

**Patentansprüche**

**1.** Verfahren der Überwachung der Durchführung von mindestens einem Schritt eines vordefinierten, an einem Industriestandort durchgeführten Prozesses, umfassend Mittel für die Durchführung besagten Prozesses an besagtem Standort, die eine Steuereinheit (13), die die Initiierung und Durchführung der Schritte besagten Prozesses steuern, und Messgeräte (MD), die an der Durchführung der Schritte für die Messung prozessbezogener Größen beteiligt sind, umfassen, sowie des Weiteren umfassend Überwachungsmittel, die Folgendes umfassen:

- eine Überwachungseinheit (25), die derart konzipiert und eingerichtet und angeschlossen ist, dass sie Echtzeitzugriff auf Messergebnisse ($MR_{MD}(t_j)$), die von den Messgeräten (MD), die an der Durchführung der zu überwachenden Schritte beteiligt sind, erhalten werden, und die Zeiten (ti), zu denen sie in Bezug auf eine Startzeit ($t_0$), zu der die Durchführung der entsprechenden Prozessschritte während des entsprechenden Laufs gestartet wurde, erhalten werden, hat, Folgendes umfassend:

-- einen Speicher (27), der ein Modell für jeden zu überwachenden Schritt speichert, wobei jedes Modell Folgendes umfasst:

a) ein primäres Modell für mindestens einige, insbesondere alle Messgeräte (MD), die an der Durchführung des entsprechenden Schritts beteiligt sind, wobei jedes primäres Modell Folgendes umfasst:

- eine Basisfunktion ($f_{MD}(t; C_{MD})$) der Zeit (t) und ein Satz Koeffizienten ($C_{MD}$), die eine Zeitabhängigkeit der Messergebnisse ($MR_{MD}$) des entsprechenden Messgeräts (MD) darstellen, die bei der fehlerfreien Durchführung des Schritts zu erwarten ist,
- eine erste Eigenschaft (K1), die durch einen Satz angepasster Koeffizienten ($D_{MD}$), die durch bestmögliche Anpassung der Basisfunktion ($f_{MD}(t; C_{MD})$) an die Messergebnisse ($MR_{MD}$), die vom entsprechenden Messgerät (MD) während einer Durchführung des Schritts erhalten werden, bestimmt werden, und einen Referenzbereich ($R_{K1}$) für die erste Eigenschaft (K1) gegeben ist.

b) ein sekundäres Modell für jedes der primären Modelle, wobei jedes eine zweite Eigenschaft (K2), die durch eine Verteilung von Residuen ($\Delta_{MD}$) zwischen den vom jeweiligen Messgerät (MD) während einer Durchführung des Schritts erhaltenen Messergebnissen ($MR_{MD}$) und der entsprechenden angepassten Funktion ($f_{MD}(t, D_{MD})$) und einem Referenzbereich ($R_{K2}$) für die zweite Eigenschaft (K2) gegeben ist, umfasst, und

c) tertiäre Modelle für Paare von Messgeräten (MDa, MDb), die an der Durchführung des Schritts beteiligt sind, die korrelierte Messergebnisse ($MR_{MDa}$, $MR_{MDb}$) während einer fehlerfreien Durchführung des Schritts liefern, wobei jedes tertiäre Modell über eine dritte Eigenschaft (K3) verfügt, die durch einen Grad der Korrelation ($Corr(MR_{MDa}, MR_{MDb})$) zwischen den gleichzeitig erhaltenen Messergebnissen ($MR_{MDa}$, $MR_{MDb}$) des entsprechenden Paars während der Durchführung des entsprechenden Schritts und einem Referenzbereich ($R_{K3}$) für die dritte Eigenschaft (K3) gegeben ist, wobei jeder der Referenzbereiche ($R_{K1}$, $R_{K2}$, $R_{K3}$) einen Bereich für die entsprechende Eigenschaft (K1, K2, K3) umfasst, von dem erwartet wird, dass die entsprechende Eigenschaft (K1, K2, K3) bei einer fehlerfreien Durchführung des Schritts innerhalb dieses Bereichs auftritt, und

- Rechenmittel (29) für die Bestimmung der für die primären, sekundären und tertiären Modellen relevanten Eigenschaften (K) auf Basis der Messergebnisse ($MR(t_j)$), die von den Messgeräten (MD), die an der Durchführung der überwachten Schritte während der überwachten Prozessläufe beteiligt sind, erhalten werden, und die Erfassung eines Fehlers, im Fall, dass mindestens eine dieser Eigenschaften (K) den entsprechenden Referenzbereich ($R_K$) verlässt,

wobei das besagte Verfahren folgende Schritte umfasst:

A) Bestimmung besagter Modelle, die in besagtem Speicher (27) mit einem an besagtem Standort durchgeführten Verfahren gespeichert werden, die folgende Schritte umfasst:

- Durchführung einer Anzahl von Testläufen des Prozesses und Bestimmung, ob ein vom entsprechenden Testlauf erhaltenes Ergebnis konform mit den vordefinierten Qualitätsanforderungen ist,
- Aufzeichnung der von bei der Durchführung des entsprechenden Schritts beteiligten Messgeräten (MD) erhaltenen Messergebnisse ($MR^i_{MD}(t_j)$) zusammen mit den Zeiten ($t_j$), zu denen sie in Bezug auf eine Startzeit ($t_o$), zu der der entsprechende Prozessschritt während des entsprechenden Testlaufs gestartet wurde, erhalten wurden, für alle Testläufe, für die Konformität mit den Qualitätsanforderungen bestimmt wurde, als durchgeführte Referenzläufe,
- Bestimmung der primären, sekundären und tertiären Modelle auf Basis der Messergebnisse ($MR^i_{MD}$) einer Grundgesamtheit von Referenzläufen (RRi), die die durchgeführten Referenzläufe oder die durchgeführten Referenzläufe und simulierten Referenzläufe, die durch auf Basis der Messergebnisse ($MR^i_{MD}$) der durchgeführten Referenzläufe durchgeführte Simulationen erhalten werden, welche Messergebnisse ($MR^i_{MD}$) der Messgeräte (MD) generieren, die bei einer fehlerfreien Durchführung des Schritts zu erwarten sind, umfassen, und

B) Überwachung mindestens eines Schritts des besagten Prozesses, für den ein Modell bestimmt wurde mittels eines Verfahrens an besagtem Standort, welche die folgenden Schritte umfasst:

- Aufzeichnung der von den bei der Durchführung des Schritts beteiligten Messgeräten (MD) während der Durchführung des Schritts erhaltenen Messergebnisse ($MR^{PR}_{MD}$),
- basierend auf den aufgezeichneten Messergebnissen ($MR_{MD}$) Bestimmung der für die primären, sekundären und tertiären Modelle des entsprechenden Schritts relevanten Eigenschaften (K), und
- Erfassung eines Fehlers im Fall, dass mindestens eine der Eigenschaften (K) den entsprechende Referenzbereich ($R_K$) verlässt.

**2.** Verfahren nach Anspruch 1, umfassend die Schritte der Bestimmung jedes primären Modells mittels:

- Bestimmung der Basisfunktion $f_{MD}(t; C_{MD})$ auf Basis der Zeitabhängigkeit der von den entsprechenden Messgeräten (MD) bei der Durchführung des entsprechenden Schritts während der Referenzläufe (RRi) erhaltenen Messergebnisse ($MR_{MD}^i(t_j)$),

- Bestimmung des Referenzbereichs ($R_{K1}$) für jede erste Eigenschaft (K1) durch

-- Bestimmung eines Satzes angepasster Koeffizienten ($D^i_{MD}$) für jeden Referenzlauf (RRi) durch die bestmögliche Anpassung der entsprechenden Basisfunktion ($f_{MD}(t; C_{MD})$) an die von dem jeweiligen Messgerät (MD) bei der Durchführung des Schritts während des entsprechenden Referenzlaufs erhaltenen Messergebnisse ($MR^i_{MD}$),
-- auf Basis einer Verteilung der bestimmten Sätze von angepassten Koeffizienten ($D^i_{MD}$) Bestimmung einer Wahrscheinlichkeit, dass eine während eines überwachten Laufs bestimmte erste Eigenschaft (K1) zu dieser Verteilung gehört, und
-- Bestimmung des Referenzbereichs ($R_{K1}$) dergestalt, dass er alle ersten Eigenschaften (K1) beinhaltet, für die die Wahrscheinlichkeit, zur Verteilung zu gehören, größer oder gleich einer vorbestimmten Wahrscheinlichkeitsschwelle ist.

3. Verfahren nach den Ansprüchen 1 bis 2, umfassend den Schritt der Bestimmung des Referenzbereichs ($R_{K2}$) für jede der zweiten Eigenschaften (K2) mittels, für jeden Referenzbereich ($R_{K2}$):

- Bestimmung einer Verteilung der Residuen ($\Delta^i_{MD}$) zwischen den von dem entsprechenden Messgerät (MD) während der Durchführung des Schritts während eines der Referenzläufe ($RR_i$) erhaltenen Messergebnissen ($MR^i_{MD}$) und der entsprechenden, für dieses Messgerät (MD) für diesen Referenzlauf ($RR_i$) bestimmten angepassten Funktion ($f^i_{MD}(t; D^i_{MD})$) für jeden der Referenzläufe ($RR_i$),
- auf Basis der gesamten bestimmten Verteilung der Residuen ($\Delta^i_{MD}$) Bestimmung einer Wahrscheinlichkeitsverteilung ($PDF_{MD}(\Delta_{MD})$), die die Wahrscheinlichkeiten von Residuen ($\Delta_{MD}$), während der fehlerfreien Durchführung des Schritts aufzutreten, als eine Funktion ihrer Größe darstellt, und
- Bestimmung des Referenzbereichs (R2) dergestalt, dass er alle zweiten Eigenschaften (K2), für die die Wahrscheinlichkeit, zu der entsprechenden Wahrscheinlichkeitsverteilung ($PDF_{MD}(\Delta_{MD})$) zu gehören, größer oder gleich einer vorbestimmten Wahrscheinlichkeitsschwelle ist, beinhaltet, insbesondere durch Bestimmung der Referenz ($R_{K2}$) als einen Bereich für eine Varianz ($\sigma^2_{MD}$) der Residuen ($\Delta_{MD}$) der Verteilung der Residuen ($\Delta_{MD}$).

4. Verfahren nach den Ansprüchen 1-3, die folgenden Schritte umfassend:

- Identifizierung von Paaren von Messgeräten ($MD_a$, $MD_b$), die an der Durchführung des Schritts beteiligt sind, die korrelierte Messergebnisse ($MR_{MDa}$, $MR_{MDb}$) während der fehlerfreien Durchführung des Schritts liefern, insbesondere ihre Identifizierung mittels
-- für jedes mögliche Paar von Messgeräten (MDa, MDb), die an der Durchführung des Schritts beteiligt sind, Bestimmung eines Grads der Korrelation ($Corr(MR^i_{MDa}, MR^i_{MDb})$) zwischen ihren während der Durchführung dieses Schritts für jeden Referenzlauf (RRi) gleichzeitig erhaltenen Messergebnissen ($MR^i_{MDa}$, $MR^i_{MDb}$), und
- Identifizierung der Paare, die korrelierte Messergebnisse ($MR_{MDa}$, $MR_{MDb}$) liefern, auf Basis der für alle möglichen Paare für alle Referenzläufe (RRi) bestimmten Grade der Korrelationen ($Corr(MR^i_{MDa}, MR^i_{MDb})$), und
- für jedes identifizierte Paar Bestimmung des Referenzbereichs ($R_{K3}$) für die entsprechende dritte Eigenschaft (K3) dergestalt, dass er alle entsprechenden dritten Eigenschaften (K3) beinhaltet, für die die Wahrscheinlichkeit, zu einer durch eine Verteilung der entsprechenden, für das entsprechende Paar für die Referenzläufe (RRi) bestimmten Grade der Korrelationen ($Corr(MR^i_{MDa}, MR^i_{MDb})$) gegebenen Referenzverteilung zu gehören, größer oder gleich einer vorbestimmten Wahrscheinlichkeitsschwelle ist.

5. Verfahren nach den Ansprüchen 1 bis 4, umfassend den Schritt der Anzeige einer Warnung im Fall, dass mindestens eine der bestimmten Eigenschaften (K1, K2, K3) in einem Bereich aufgetreten ist, der entsprechend einer Verteilung der entsprechenden Eigenschaft (K1 ,K2, K3), die bei der fehlerfreien Durchführung des Schritts zu erwarten ist, insbesondere einer entsprechenden Verteilung von Sätzen angepasster Koeffizienten ($D_{MD}$), einer entsprechenden Wahrscheinlichkeitsverteilung von Residuen ($PDF(\Delta_{MD})$) und einer entsprechenden Referenzverteilung der Grade der Korrelation ($Corr(MR_{MDa}, MR_{MDb})$), eine geringe Wahrscheinlichkeit des Auftretens hat.

6. Verfahren nach den Ansprüchen 1 bis 5, des Weiteren umfassend die Schritte der Bestimmung einer Auswirkung einer Störung einer bestimmten Art auf die Eigenschaften (K) des Modells für einen von der Überwachungseinheit (25) gemäß Anspruch 1 überwachten Schritt des Prozesses, umfassend den folgenden Schritt:

- Aufzeichnung von Messergebnissen ($MR^{DR}_{MD}$) der Messgeräte (MD), die an der Durchführung des Schritts beteiligt sind, während gestörten Läufen des Prozessschrittes, während derer eine Störung dieser Art absichtlich hervorgerufen wurde, und/oder Generierung entsprechender Messergebnisse ($MR^{DR}_{MD}$), die während Durchführungen dieses Schritts, die unter der entsprechenden Störung leiden, zu erwarten sind, durch numerische Simulationen,

- Bestimmung von gestörten primären, sekundären und tertiären Modellen auf dieselbe Art, wie die primären, sekundären und tertiären Modelle, die die fehlerfreie Durchführung des entsprechenden Schritts darstellen, bestimmt wurden, auf Basis von aufgezeichneten und/oder generierten Messergebnissen ($MR^{DRi}_{MD}$) einer Grundgesamtheit gestörter Läufe (DRi), die unter Störungen derselben Größe und derselben Art leiden,
- Wiederholung der Bestimmung der gestörten primären, sekundären und tertiären Modelle für steigende Größen derselben Störungsart,
- Bestimmung der Auswirkung der Störungsart auf die Eigenschaften (K) des Modells durch Vergleich der Verteilung der Eigenschaften (K), insbesondere der Verteilungen der Sätze angepasster Koeffizienten ($D_{MD}$), der Wahrscheinlichkeitsverteilung der Residuen ($PDF(\Delta_{MD})$) und der Referenzverteilungen der Grade der Korrelation ($Corr(MR_{MDa}, MR_{MDb})$), die auf Basis der Messergebnisse ($MR^i_{MD}$) der Referenzläufe (RRi) bestimmt werden, mit den entsprechenden Verteilungen derselben Eigenschaften (K), die auf Basis der Messergebnisse ($MR^{DRi}_{MD}$) der gestörten Läufe (DRi) bestimmt werden.

**7.** Verfahren nach den Ansprüchen 1 bis 6, umfassend die folgenden Schritte:

- Validierung der Durchführungen beobachteter Schritte, während derer kein Fehler erfasst wurde,
- insbesondere ihre Validierung mit einer auf Basis eines Konfidenzniveaus ($\alpha$) für die Erfassung eines Fehlers in dem Fall, das seine Störung einer bestimmten Art und dieser Größe oder größer vorhanden ist, und/oder einer Wahrscheinlichkeit ($\beta$) der Nicht-Erfassung eines Fehlers, auch wenn eine Störung einer bestimmten Art und dieser Größe vorhanden ist, bestimmten Zuverlässigkeit, die für eine oder mehrere Störungen bestimmt wird,

-- für die ihre Auswirkung auf die Eigenschaften (K) auf Basis des Verfahrens nach Anspruch 6 bestimmt wurde, und
-- für die das Konfidenzniveau ($\alpha$) und/oder die Wahrscheinlichkeit ($\beta$) auf Basis der auf Basis der Messergebnisse ($MR^{DRi}_{MD}$) der gestörten Läufe (DRi), die von steigenden Größen der Störungen dieser Art leiden, und der Referenzbereiche ($R_K$) für die überwachten Eigenschaften (K) bestimmten Verteilungen der Eigenschaften (K) bestimmt wurde.

**8.** Verfahren nach Anspruch 7, umfassend die folgenden Schritte:

- Speicherung der während validierter Durchführungen erhaltenen Messergebnisse ($MR_{MD}$), und
- Aktualisierung der in der Überwachungseinheit (25) gespeicherten Ergebnisse auf Basis von Messergebnissen ($MR_{MD}$) validierter Durchführungen des entsprechenden Schritts.

**9.** Verfahren nach den Ansprüchen 1 bis 8, wobei Datensätze in Bezug auf bekannte Störungsarten, die während der Durchführung eines der Schritte, für die ein Modell im Speicher (27) der Überwachungseinheit (25), gespeichert ist, in einer Datenbasis (33) einer Diagnoseeinheit (31) für die Durchführung von Diagnosen in Bezug auf von besagten Überwachungsmitteln erfasste Fehler gespeichert werden, wobei jeder Datensatz Folgendes umfasst:

- die Art der Störung, und
- ihre Auswirkung auf jede der durch das Verfahren nach Anspruch 6 bestimmten überwachten Eigenschaften (K).

**10.** Verfahren nach Anspruch 9, wobei mindestens ein Datensatz Folgendes umfasst

- eine Liste mit mindestens einer, die entsprechende Störung verursachenden grundlegenden Ursache,
- insbesondere eine Liste mit mindestens einer grundlegenden Ursache und eine Liste mit mindestens einer Maßnahme für mindestens eine der gelisteten grundlegenden Ursachen, insbesondere eine Maßnahme, die auf die Bestimmung ausgerichtet ist, ob die entsprechende grundlegende Ursache vorhanden ist, und/oder eine Maßnahme, die durch eine Abhilfemaßnahme gegeben ist, die für die Behebung der entsprechenden grundlegenden Ursache geeignet ist.

**11.** Verfahren nach den Ansprüchen 9 bis 10, wobei besagtes Verfahren des Weiteren den Schritt der Durchführung einer Diagnose in Bezug auf einen von besagten Überwachungsmitteln erfassten Fehler umfasst, mittels:

- Durchsuchung der Datenbasis (31) nach Datensätzen, die für Störungen gespeichert wurden, die eine Auswirkung auf die einzelnen Eigenschaften (K) haben, die mit den für die vorhandene fehlerhafte Durchführung des entsprechenden Prozessschritts bestimmten Eigenschaften (K) übereinstimmt, und
- im Fall, dass mindestens eine übereinstimmende Störung gefunden wird,

    -- Bestimmung der in den entsprechenden Datensätzen gespeicherten grundlegenden Ursachen als mögliche grundlegende Ursachen, die den erfassten Fehler verursacht haben können, und
    -- Durchführung der Diagnose auf Basis der bestimmten möglichen grundlegenden Ursachen.

12. Verfahren nach den Ansprüchen 9 bis 10, wobei besagtes Verfahren des Weiteren den Schritt der Durchführung einer Diagnose in Hinblick auf einen von besagten Überwachungsmitteln 10 erfassten Fehler umfasst, welche die folgenden Schritte umfasst:

- Durchsuchung der Datenbank (31) nach Datensätzen, die für Störungen gespeichert wurden, die eine Auswirkung auf die einzelnen Eigenschaften (K) haben, die mit den für die vorhandene fehlerhafte Durchführung des entsprechenden Prozessschritts bestimmten Eigenschaften (K) übereinstimmt, und
- im Fall, dass keine übereinstimmende Störung gefunden wird,

    -- Bestimmung, in welcher Richtung die Eigenschaften (K), die den entsprechenden Referenzbereich ($R_K$) verlassen haben, den entsprechenden Referenzbereich ($R_K$) verlassen haben,
    -- für jede Eigenschaft (K), für die die Richtung, in die sie den entsprechenden Referenzbereich ($R_K$) verlassen hat, bestimmt wurde, Durchsuchung der Datenbank nach Störungen, die das Verlassen des Referenzbereichs ($R_K$) durch dieselbe Eigenschaft (K) in derselben oder eine ähnliche Richtung verursachen,
    -- Bestimmung der in den Datensätzen der Störungen, die das Verlassen des entsprechenden Referenzbereichs ($R_K$) durch die entsprechenden Eigenschaften (K) in derselben Richtung verursachen, gespeicherten grundlegenden Ursachen als mögliche grundlegende Ursachen, und
- Durchführung der Diagnose auf Basis der bestimmten möglichen grundlegenden Ursachen.

13. Verfahren nach Anspruch 9 oder 10, des Weiteren ein Verfahren für die Durchführung einer Diagnose in Bezug auf einen von besagten Überwachungsmitteln erfassten Fehler umfassend, welche die folgenden Schritte umfasst:

- im Fall, dass die erste oder die zweite Eigenschaft (K1, K2), die für eines der an der Durchführung des Schritts beteiligten Messgeräte (MD) bestimmt wurde, den entsprechenden Referenzbereich ($R_{K1}$, $R_{K2}$) verlassen hat, und eine der dritten Eigenschaften (K3) in Bezug auf ein für dasselbe Messgerät (MD) relevantes tertiäres Modell einen verminderten Korrelationsgrad zeigt, Diagnose einer für dieses Messgerät (MD) relevanten Störung,
und/oder
- im Fall, dass die erste oder die zweite Eigenschaft (K1, K2), die für eines der an der Durchführung des Schritts beteiligten Messgeräte (MD) bestimmt wurde, den entsprechenden Referenzbereich ($R_{K1}$, $R_{K2}$) verlassen hat, und keine der dritten Eigenschaften (K3) in Bezug auf ein für dasselbe Messgerät (MD) relevantes tertiäres Modell einen verminderten Korrelationsgrad zeigt, Diagnose einer Störung, die die von diesem Messgerät (MD) gemessene Größe beeinflusst.

14. Verfahren nach Anspruch 11, 12 oder 13, wobei

- zusätzliche Informationen in der Datenbank (33) gespeichert werden,
- insbesondere Informationen zu zusätzlichen Störungen, grundlegenden Ursachen, Maßnahmen in Bezug auf grundlegende Ursachen und/oder zusätzliche Diagnoseinformationen, insbesondere Regeln für die Bestimmung von grundlegenden Ursachen, Diagnosewerkzeuge und/oder Diagnoseverfahren, und
- die zusätzlichen Informationen während der Durchführung der Diagnose angewendet werden, insbesondere zur Bestimmung der Störung und/oder der grundlegenden Ursache, die den erfassten Fehler verursacht hat.

15. Verfahren nach Anspruch 11 oder 14, umfassend den Schritt der Durchführung einer Diagnose in Bezug auf einen von besagten Überwachungsmitteln erfassten Fehler, welche den folgenden Schritt umfasst: Bestimmung der grundlegenden Ursache des erfassten Fehlers auf Basis der bestimmten möglichen grundlegenden Ursachen und der auf die Bestimmung ihres Vorhandenseins ausgerichteten Maßnahmen, die in der Datenbank (33) gespeichert sind, durch Durchführung der Maßnahmen in einer Reihenfolge, insbesondere in einer von der Diagnoseeinheit (31) empfohlenen Reihenfolge, entsprechend ihrer Verfügbarkeit und der Zeit und der Kosten in Verbindung mit ihrer Durchführung, insbesondere durch Durchführung mindestens einer dieser Maßnahmen, die auf eine automatisierte Weise am Standort durchgeführt werden können, auf eine automatisierte Weise auf Basis einer entsprechenden, von der Diagnoseeinheit (31) ausgegebenen Anforderung und/oder Initiierung und/oder Durchführung mindestens einer dieser Maßnahmen durch einen Betreiber dieses Standorts.

**16.** Verfahren nach Anspruch 11 oder 14, umfassend die folgenden Schritte:

- Bestimmung der grundlegenden Ursache, die den gegenwärtigen erfassten Fehler verursacht hat,
- Anwendung einer Abhilfemaßnahme zur Behebung der grundlegenden Ursache, und
- während eines Verifizierungszeitintervalls Überwachung aufeinanderfolgender Durchführungen des Prozessschritts, und
- Validierung der angewendeten Abhilfemaßnahme im Fall, dass kein weiterer Fehler während der Durchführung des entsprechenden Schritts während des Verifikationszeitintervalls erfasst wurde.

**17.** Verfahren nach Anspruch 9 oder 10, des Weiteren umfassend die Schritte zur Änderung der Datenbank (33) der Diagnoseeinheit (31) mittels

- Hinzufügen mindestens eines Datensatzes in Bezug auf eine Störung, die am Standort aufgetreten ist und anschließend identifiziert wurde, insbesondere eines Datensatzes, der eine Auswirkung dieser Störung auf die Eigenschaften (K), insbesondere eine Auswirkung, die durch das Verfahren nach Anspruch 6 bestimmt wird, umfasst
- Hinzufügen mindestens einer grundlegenden Ursache, die eine der in der Datenbank enthaltenen Störungen verursacht, insbesondere grundlegende Ursachen, die vom Betreiber während des Betriebs des Standorts identifiziert werden,
- Hinzufügen mindestens einer Maßnahme in Bezug auf eine der in der Datenbank gelisteten grundlegenden Ursachen, insbesondere eine Maßnahme, die vom Betreiber während des Betriebs des Standorts identifiziert wird,
- für mindestens eine von einem der Messgeräte (MD) gemessene Eigenschaft Hinzufügen einer Liste mit mindestens einer grundlegenden Ursache, insbesondere einer Liste mit mindestens einer grundlegenden Ursache und einer Liste mit mindestens einer Maßnahme in Bezug auf eine der grundlegenden Ursachen, die diese gemessene Eigenschaft beeinflusst, und/oder
- für mindestens eines der Messgeräte (MD) Hinzufügen einer Liste mit mindestens einer grundlegenden Ursache, insbesondere einer Liste mit mindestens einer grundlegenden Ursache und einer Liste mit mindestens einer Maßnahme in Bezug auf eine der grundlegenden Ursachen, die eine Beeinträchtigung dieses Messgeräts (MD) verursacht.

## Revendications

**1.** Procédé de surveillance de l'exécution d'au moins une étape d'un process prédéfini exécuté sur un site industriel comprenant des moyens pour exécuter ledit process sur ledit site, comprenant une unité de commande (13) contrôlant le lancement et l'exécution des étapes dudit process et des appareils de mesure (MD) impliqués dans l'exécution des étapes pour mesurer les quantités liées au process, et comportant en outre des moyens de surveillance comprenant :

- une unité de surveillance (25) conçue et mise en place et connectée de telle sorte qu'elle ait accès en temps réel aux résultats de mesure ($MR_{MD}(t_j)$) obtenus par les appareils de mesure (MD) impliqués dans l'exécution des étapes à surveiller et aux instants ($t_j$) auxquels ils ont été obtenus par rapport à un instant de départ ($t_0$) auquel l'exécution de l'étape de process respective a commencé pendant le cycle respectif, comprenant :

-- une mémoire (27) stockant un modèle pour chaque étape à surveiller, chaque modèle comprenant :

a) un modèle primaire pour au moins certains, notamment tous les appareils de mesure (MD) impliqués dans l'exécution de l'étape respective, chacun comprenant :

- une fonction de base ($f_{MD}(t ; C_{MD})$) du temps (t) et un ensemble de coefficients ($C_{MD}$) représentant une dépendance temporelle des résultats de mesure ($MR_{MD}$) des appareils de mesure (MD) respectifs à attendre pendant l'exécution sans défaut de l'étape,
- une première propriété (K1) définie par un ensemble de coefficients ajustés ($D_{MD}$) déterminés par le meilleur ajustement de la fonction de base ($f_{MD}(t\,;\,C_{MD})$) aux résultats de mesure ($MR_{MD}$) obtenus par le dispositif de mesure (MD) respectif pendant l'exécution de l'étape, et une plage de référence ($R_{K1}$) pour la première propriété (K1),

b) un modèle secondaire pour chacun des modèles primaires, comprenant chacun une deuxième propriété (K2) définie par une dispersion de résidus ($\Delta_{MD}$) entre les résultats de mesure ($MR_{MD}$) obtenus par le dispositif de mesure (MD) respectif pendant une exécution de l'étape et la fonction ajustée ($f_{MD}(t, D_{MD})$) correspondante, et une plage de référence ($R_{K2}$) pour la deuxième propriété (K2), et

c) des modèles tertiaires pour les paires d'appareils de mesure (MDa, MDb) impliquées dans l'exécution de l'étape, qui rendent des résultats de mesure corrélés ($MR_{MDa}$, $MR_{MDb}$) lors d'une exécution sans faille de l'étape, chaque modèle tertiaire comprenant une troisième propriété (K3), définie par un degré de corrélation (Corr($MR_{MDa}$, $MR_{MDb}$)) entre des résultats de mesure ($MR_{MDa}$, $MR_{MDb}$) obtenus simultanément de la paire respective pendant l'exécution de l'étape respective, et une plage de référence ($R_{K3}$) pour la troisième propriété (K3), chacune des plages de référence ($R_{K1}$, $R_{K2}$, $R_{K3}$) comprenant une plage pour la propriété (K1, K2, K3) respective dans laquelle la propriété (K1, K2, K3) respective est censée se produire pendant l'exécution sans défaut de l'étape, et

-- des moyens de calcul (29) pour déterminer les propriétés (K) pertinentes pour les modèles primaires, secondaires et tertiaires sur la base des résultats de mesure ($MR(t_j)$) obtenus par les appareils de mesure (MD) impliqués dans l'exécution des étapes surveillées pendant les cycles surveillés du process, et pour détecter un défaut, dans le cas où au moins une de ces propriétés (K) dépasse la plage de référence ($R_K$) correspondante, ledit procédé comprenant les étapes suivantes :

A) détermination desdits modèles stockés dans ladite mémoire (27) par une méthode exécutée sur ledit site comprenant les étapes suivantes :

- exécution d'un certain nombre de cycles de test du process et détermination si un résultat produit par le cycle de test respectif est conforme aux exigences de qualité prédéfinies,
- enregistrement des résultats de mesure ($MR^i_{MD}(t_j)$) obtenus par les appareils de mesure (MD) impliqués dans l'exécution de l'étape respective ainsi que les instants ($t_j$) auxquels ils ont été obtenus par rapport à un instant de départ ($t_0$) auquel l'étape de process respective a été commencée pendant le cycle de test respectif pour tous les cycles de test, pour lesquels la conformité aux exigences de qualité a été déterminée, en tant que cycles de référence exécutés,
- détermination des modèles primaires, secondaires et tertiaires basés sur les résultats de mesure ($MR^i_{MD}$) d'une population de cycles de référence (RRi), comprenant les cycles de référence exécutés, ou les cycles de référence exécutés et les cycles de référence simulés, obtenus par des simulations effectuées sur la base des résultats de mesure ($MR^i_{MD}$) des cycles de référence exécutés, qui génèrent les résultats de mesure ($MR^i_{MD}$) des appareils de mesure (MD) à attendre lors de l'exécution sans défaut de l'étape, et

B) surveillance d'au moins une étape dudit process pour laquelle un modèle a été déterminé par une méthode exécutée sur ledit site comprenant les étapes suivantes :

- enregistrement des résultats de mesure ($MR^{PR}_{MD}$) obtenus par les appareils de mesure (MD) impliqués dans l'exécution de l'étape pendant l'exécution de l'étape,
- sur la base des résultats de mesure enregistrés ($MR_{MD}$) déterminant les propriétés (K) pertinentes pour les modèles primaires, secondaires et tertiaires de l'étape respective, et
- détection d'un défaut, dans le cas où au moins une des propriétés (K) dépasse la plage de référence ($R_K$) correspondante.

2. Procédé selon la revendication 1, comprenant les étapes de détermination de chaque modèle primaire par la :

- détermination de la fonction de base $f_{MD}(t\,;\,C_{MD})$ sur la base de la dépendance temporelle des résultats de mesure ($MR_{MD}^i(t_j)$) obtenus par les appareils de mesure (MD) respectifs pendant l'exécution de l'étape correspondante lors des cycles de référence (RRi),
- détermination de la plage de référence ($R_{K1}$) pour chaque première propriété (K1) par la

-- détermination d'un ensemble de coefficients ajustés ($D^i_{MD}$) pour chaque cycle de référence (RRi) en ajustant au mieux la fonction de base ($f_{MD}(t ; C_{MD})$) respective aux résultats de mesure ($MR_{MD}^i$) obtenus par le dispositif de mesure respectif (MD) lors de l'exécution de l'étape pendant la course de référence respective (RRi),

-- sur la base d'une distribution des ensembles déterminés de coefficients ajustés ($D_{MD}^i$), détermination d'une probabilité qu'une première propriété (K1) déterminée au cours d'un cycle surveillé appartienne à cette distribution, et

-- détermination de la plage de référence ($R_{K1}$) de telle sorte qu'elle comprenne toutes les premières propriétés (K1), pour lesquelles la probabilité d'appartenir à la distribution est supérieure ou égale à un seuil de probabilité prédéterminé.

3. Procédé selon la revendication 1 à 2, comprenant l'étape de détermination de la plage de référence ($R_{K2}$) pour chacune des deuxièmes propriétés (K2) par, pour chaque plage de référence ($R_{K2}$) :

- détermination d'une dispersion des résidus ($\Delta_{MD}^i$) entre les résultats de mesure ($MR_{MD}^i$) obtenus par l'appareil de mesure (MD) respectif lors de l'exécution de l'étape pendant l'un des cycles de référence ($RR_i$) et la fonction ajustée ($f_{MD}^i(t ; D_{MD}^i)$) correspondante déterminée pour cet appareil de mesure (MD) pour ce cycle de référence (RRi) pour chacun des cycles de référence (RRi),

- sur la base de l'ensemble de la dispersion des résidus ($\Delta_{MD}^i$) déterminée, déterminant une distribution de probabilité ($PDF_{MD}(\Delta_{MD})$) représentant les probabilités que les résidus ($\Delta_{MD}$) se produisent lors de l'exécution sans défaut de l'étape en fonction de leur taille, et

- détermination de la plage de référence ($R_{K2}$) telle qu'elle inclut toutes les deuxièmes propriétés (K2), pour lesquelles la probabilité d'appartenir à la distribution de probabilité correspondante ($PDF_{MD}(\Delta_{MD})$) est supérieure ou égale à un seuil de probabilité prédéterminé, notamment en déterminant la référence ($R_{K2}$) comme une plage pour une variance ($\sigma_{MD}^2$) des résidus ($\Delta_{MD}$) de la dispersion des résidus ($\Delta_{MD}$).

4. Procédé selon l'une des revendications 1 à 3, comprenant les étapes suivantes :

- identification de paires d'appareils de mesure ($MD_a$, $MD_b$) impliquées dans l'exécution de l'étape qui rendent des résultats de mesure corrélés ($MR_{MDa}$, $MR_{MDb}$) lors de l'exécution sans défaut de l'étape, notamment en les identifiant par

-- pour chaque paire possible d'appareils de mesure ($MD_a$, $MD_b$) impliqués dans l'exécution de l'étape, détermination d'un degré de corrélation ($Corr(MR_{MDa}^i, MR_{MDb}^i)$) entre leurs résultats de mesure obtenus simultanément ($MR_{MDa}^i$, $MR_{MDb}^i$) pendant l'exécution de cette étape pour chaque cycle de référence (RRi), et

- identification des paires rendant des résultats de mesure corrélés ($MR_{MDa}$, $MR_{MDb}$) sur la base des degrés de corrélation ($Corr(MR_{MDa}^i, MR_{MDb}^i)$) déterminés pour toutes les paires possibles pour tous les cycles de référence (RRi), et

- pour chaque paire identifiée, détermination de la plage de référence ($R_{K3}$) pour la troisième propriété (K3) respective, de telle sorte qu'elle comprenne toutes les troisièmes propriétés (K3) respectives, pour lesquelles la probabilité d'appartenir à une distribution de référence donnée par une distribution des degrés de corrélation correspondants ($Corr(MR_{MDa}^i, MR_{MDb}^i)$) déterminée pour la paire respective pour les cycles de référence (RRi) est supérieure ou égale à un seuil de probabilité prédéterminé.

5. Procédé selon l'une des revendications 1 à 4, comprenant l'étape d'indication d'un avertissement dans le cas où au moins l'une des propriétés déterminées (K1, K2, K3) se trouve dans une plage, qui selon une distribution de la propriété (K1, K2, K3) respective, est à prévoir pendant l'exécution sans défaut de l'étape, notamment une distribution correspondante d'ensembles de coefficients ajustés ($D_{MD}$), une distribution de probabilité correspondante des résidus ($PDF(\Delta_{MD})$) et une distribution de référence correspondante des degrés de corrélation ($Corr(MR_{MDa}, MR_{MDb})$), a une faible probabilité de se produire.

6. Procédé selon l'une des revendications 1 à 5, comprenant en outre les étapes de détermination d'un impact d'une perturbation d'un certain type sur les propriétés (K) du modèle pour une étape du process surveillée par l'unité de surveillance (25) selon la revendication 1, comprenant les étapes suivantes :

- enregistrement des résultats de mesure ($MR_{MD}^{DR}$) des appareils de mesure (MD) impliqués dans l'exécution de l'étape pendant les cycles perturbés de l'étape du process, au cours desquels une perturbation de ce type a été volontairement induite, et/ou génération des résultats de mesure (MR$^{DR}_{MD}$) correspondants à attendre pendant les performances de cette étape souffrant de la perturbation respective par des simulations numériques,
- détermination des modèles primaires, secondaires et tertiaires perturbés de la même manière que les modèles primaires, secondaires et tertiaires représentant la performance sans défaut de l'étape respective ont été déterminés sur la base des résultats de mesure enregistrés et/ou générés (MR$^{DRi}_{MD}$) d'une population de cycles perturbés (DRi) souffrant de perturbations de même taille et de même type,
- répétition de la détermination des modèles primaires, secondaires et tertiaires perturbés pour des tailles croissantes d'un même type de perturbation,
- détermination de l'impact du type de perturbation sur les propriétés (K) du modèle en comparant les distributions des propriétés (K), notamment les distributions des ensembles de coefficients ajustés (D$_{MD}$), la distribution de probabilité des résidus (PDF($\Delta_{MD}$)) et les distributions de référence des degrés de corrélation (Corr(MR$_{MDa}$, MR$_{MDb}$)) déterminées sur la base des résultats de mesure (MR$^{i}_{MD}$) des cycles de référence (RRi) aux distributions correspondantes des mêmes propriétés (K) déterminées sur la base des résultats de mesure (MR$^{DRi}_{MD}$) des cycles perturbés (DRi).

7. Procédé selon l'une des revendications 1 à 6, comprenant les étapes suivantes :

- validation des exécutions des étapes surveillées au cours desquelles aucun défaut n'a été détecté,
- notamment en les validant avec une fiabilité déterminée sur la base d'un niveau de confiance ($\sigma$) pour détecter un défaut, en cas de présence d'une perturbation d'un certain type et de cette taille ou d'une taille plus grande, et/ou une probabilité ($\beta$) de ne pas détecter un défaut, même en présence d'une perturbation d'un certain type et de cette taille, déterminée pour une ou plusieurs perturbations,

-- perturbations pour lesquelles l'impact sur les propriétés (K) a été déterminé sur la base de la méthode selon la revendication 6, et
-- perturbations pour lesquelles le niveau de confiance ($\sigma$) et/ou la probabilité ($\beta$) ont été déterminés sur la base des distributions des propriétés (K) déterminées à partir des résultats de mesure (MR$^{DRi}_{MD}$) des cycles perturbés (DRi) souffrant de tailles croissantes de perturbations de ce type et des plages de référence (R$_K$) pour les propriétés surveillées (K).

8. Procédé selon la revendication 7, comprenant les étapes de :

- stockage des résultats de mesure (MR$_{MD}$) obtenus lors des exécutions validées, et
- mise à jour du modèle stocké dans l'unité de surveillance (25) sur la base des résultats de mesure (MR$_{MD}$) des exécutions validées de l'étape respective.

9. Procédé selon l'une des revendications 1 à 8, pour lequel des ensembles de données relatifs à des types connus de perturbations, qui peuvent se produire pendant l'exécution de l'une des étapes pour lesquelles un modèle est stocké dans la mémoire (27) de l'unité de surveillance (25) sont stockés dans une base de données (33) d'une unité de diagnostic (31) pour effectuer des diagnostics concernant des défauts détectés par lesdits moyens de surveillance, chacun des ensembles de données comprenant :

- le type de perturbation, et
- son impact sur chacune des propriétés surveillées (K) déterminées par la méthode selon la revendication 6.

10. Procédé selon la revendication 9, pour lequel au moins un ensemble de données comprend

- une liste d'au moins une cause fondamentale, à l'origine de la perturbation respective,
- notamment une liste d'au moins une cause fondamentale et une liste d'au moins une action pour au moins une des causes fondamentales listées, notamment une action visant à déterminer si la cause fondamentale respective est présente et/ou une action donnée par un remède approprié pour résoudre la cause fondamentale respective.

11. Procédé selon l'une des revendications 9 à 10, ledit procédé comprenant en outre l'étape d'exécution d'un diagnostic concernant un défaut détecté par les moyens de surveillance, lequel procédé comprend les étapes suivantes :

- recherche, dans la base de données (31) d'ensembles de données stockés pour les perturbations, qui ont un impact sur les propriétés individuelles (K), qui correspondent aux propriétés (K) déterminées pour l'exécution défectueuse actuelle de l'étape respective du process, et
- dans le cas où au moins une perturbation correspondante est trouvée,

-- détermination des causes fondamentales stockées dans les ensembles de données respectifs, en tant que causes fondamentales possibles, qui peuvent avoir causé le défaut détecté, et
-- exécution du diagnostic sur la base des causes fondamentales possibles déterminées.

12. Procédé selon l'une des revendications 9 à 10, ledit procédé comprenant en outre l'étape d'exécution d'un diagnostic concernant un défaut détecté par les moyens de surveillance, lequel procédé comprend les étapes suivantes :

- recherche, dans la base de données (31) d'ensembles de données stockés pour les perturbations qui ont un impact sur les propriétés individuelles (K), qui correspondent aux propriétés (K) déterminées pour l'exécution défectueuse actuelle de l'étape respective du process, et
- dans le cas où aucune perturbation correspondante n'est trouvée

-- détermination de la direction dans laquelle les propriétés (K), qui ont dépassé la plage de référence ($R_K$) correspondante, ont dépassé la plage de référence ($R_K$) correspondante,
-- pour chaque propriété (K), pour laquelle la direction dans laquelle elle a dépassé la plage de référence ($R_K$) correspondante a été déterminée, recherche dans la base de données des perturbations qui font que la même propriété (K) dépasse cette plage de référence ($R_K$) dans la même direction ou dans une direction similaire,
-- détermination des causes fondamentales stockées dans les ensembles de données des perturbations, qui font que les propriétés respectives (K) dépassent la plage de référence ($R_K$) correspondante dans la même direction, comme causes fondamentales possibles, et

- exécution du diagnostic sur la base des causes profondes possibles déterminées.

13. Procédé selon l'une des revendications 9 à 10, ledit procédé comprenant en outre l'étape d'exécution d'un diagnostic concernant un défaut détecté par les dits moyens de surveillance, lequel procédé comprend les étapes suivantes :

- dans le cas où la première ou la deuxième propriété (K 1, K2) déterminée pour l'un des appareils de mesure (MD) impliqués dans l'exécution de l'étape dépasse la plage de référence ($R_{K1}$, $R_{K2}$) correspondante et où l'une des troisièmes propriétés (K3) liées à un modèle tertiaire pertinent pour le même appareil de mesure (MD) présente un degré de corrélation réduit,
diagnostic d'une perturbation pertinente pour cet appareil de mesure (MD), et/ou
- dans le cas où la première ou la deuxième propriété (K1, K2) déterminée pour l'un des appareils de mesure (MD) impliqués dans l'exécution de l'étape (MD) dépasse la plage de référence ($R_{K1}$, $R_{K2}$) correspondante et qu'aucune des troisièmes propriétés (K3) liées à un modèle tertiaire pertinent pour le même appareil de mesure (MD) ne présente un degré de corrélation réduit,
diagnostic d'une perturbation affectant la quantité mesurée par ce dispositif de mesure (MD).

14. Procédé selon la revendication 11, 12 ou 13, pour lequel

- des informations supplémentaires sont stockées dans la base de données (33),
- notamment des informations sur les perturbations supplémentaires, les causes fondamentales, les actions liées aux causes fondamentales et/ou des informations de diagnostic supplémentaires, notamment les règles de détermination des causes fondamentales, les outils de diagnostic et/ou les méthodes de diagnostic, et
- les informations supplémentaires sont appliquées lors de l'exécution du diagnostic, notamment afin de déterminer la perturbation et/ou la cause fondamentale qui a provoqué le défaut détecté.

15. Procédé selon la revendication 11 ou 14, comprenant l'étape d'exécution d'un diagnostic concernant un défaut détecté par les moyens de surveillance comprenant l'étape de détermination de la cause fondamentale du défaut détecté sur la base des causes fondamentales possibles déterminées et des actions visant à déterminer leur présence stockées dans la base de données (33), en exécutant les actions dans un ordre, notamment un ordre recommandé par l'unité de diagnostic (31), correspondant à leur disponibilité et au temps et au coût nécessaires à leur exécution, notamment en faisant exécuter de manière automatisée au moins une de ces actions, qui peut être exécutée de manière automatisée sur le site, sur la base d'une demande correspondante émise par l'unité de diagnostic (31) et/ou en faisant initier et/ou exécuter au moins une de ces actions par un opérateur du site.

**16.** Procédé selon la revendication 11 ou 14, comprenant les étapes suivantes :

- détermination de la cause principale, qui était à l'origine du défaut actuellement détecté,
- application d'un remède pour résoudre la cause principale, et
- pendant un intervalle de temps de vérification, surveillance des performances consécutives de l'étape du process, et
- validation du remède appliqué, dans le cas où aucun autre défaut n'a été détecté pendant les exécutions de l'étape respective pendant l'intervalle de temps de vérification.

**17.** Procédé selon l'une des revendications 9 à 10, comprenant en outre l'étape de la modification de la base de données (33) de l'unité de diagnostic (31) par

- l'ajout d'au moins un jeu de données relatif à une perturbation qui s'est produite sur le site et a été identifiée par la suite, notamment un jeu de données comprenant un impact de la perturbation sur les propriétés (K), notamment un impact déterminé par le procédé selon la revendication 6,
- l'ajout d'au moins une cause principale, à l'origine d'une des perturbations contenues dans la base de données, notamment des causes principales identifiées par l'opérateur pendant l'exploitation du site,
- l'ajout d'au moins une action relative à l'une des causes principales listées dans la base de données, notamment une action identifiée par l'opérateur pendant l'exploitation du site,
- pour au moins une propriété mesurée par l'un des appareils de mesure (MD), l'ajout d'une liste d'au moins une cause principale, notamment une liste d'au moins une cause principale et une liste d'au moins une action relative à l'une des causes principales, affectant la propriété mesurée, et/ou
- pour au moins l'un des appareils de mesure (MD), l'ajout d'une liste d'au moins une cause principale, notamment une liste d'au moins une cause principale et une liste d'au moins une action relative à l'une des causes principales, causant une défaillance de cet appareil de mesure (MD).

Fig. 1

HR_La

$t^i_{La}(t)$

Fig. 2a

HR_Lb

$t^i_{Lb}(t)$

Fig. 2b

HR_Fa

$t^i_{Fa}(t)$

Fig. 2c

C_La2

Δ

C_La1

Fig. 3a

C_Lb2

C_Lb1

Fig. 3b

C_Fa1

Fig. 3c

PDF_La(Δ_La)

Δ_La

Fig. 4a

PDF_Lb(Δ_Lb)

Δ_Lb

Fig. 4b

PDF_Fa(Δ_Fa)

Δ_Fa

Fig. 4c

HR_La

$\dot{\tau}_{La}^{i}(t)$

t

Fig.2d

c_La

Fig.3d

PDF_La(Δ_La)

Δ_La

Fig.4d

HR_Lb

$\dot{\tau}_{Lb}^{i}(t)$

t

Fig.2e

c_Lb

Fig.3e

PDF_Lb(Δ_Lb)

Δ_Lb

Fig.4e

Fig.5

Fig.6

Fig.7

**EP 3 002 651 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1725919 B1
- US 2003014692 A1